# EUROPÄISCHE PATENTANMELDUNG

(11) **EP 4 834 568 A1**
(43) Veröffentlichungstag der Anmeldung: **04.11.2026**
(21) Anmeldenummer: 26172400.9
(22) Anmeldetag: 14.04.2026
(51) Int. Cl.: B29C 64/314, A61C 13/00, B29C 64/124, B29C 64/255, B29C 64/336, B33Y 10/00, B33Y 30/00, B33Y 40/00, B29L 31/00

(54) **MATERIALVORRATSBEHÄLTER FÜR MATERIAL ZUR ADDITIVEN HERSTELLUNG EINER DENTALRESTAURATION, VERFAHREN ZUM BEFÜLLEN EINES MATERIALVORRATSBEHÄLTERS SOWIE VORRICHTUNG UND VERFAHREN ZUM ADDITIVEN HERSTELLEN EINER DENTALRESTAURATION**

(30) Priorität: 25.04.2025 EP 25172711
(71) Anmelder: Ivoclar Vivadent AG, 9494 Schaan (LI)
(72) Erfinder: BONDERER, Lorenz, 7320 Sargans (CH); DEISINGER, Steffen, 6800 Feldkirch (AT); RIVERA-TORRES, Nector I., Somerset, NJ 08873 (US)
(74) Vertreter: Maiwald GmbH

(57) **Zusammenfassung**

Es wird ein Materialvorratsbehälter (22) für Material (M1, M2, M3) zur additiven Herstellung einer Dentalrestauration (12) beschrieben. Der Materialvorratsbehälter umfasst einen Aufnahmeraum (26) und einen Bereitstellungsport (28), der materialleitend mit dem Aufnahmeraum (26) gekoppelt ist, sodass über den Bereitstellungsport (28) Material (M1, M2, M3) aus dem Aufnahmeraum (26) zur additiven Herstellung der Dentalrestauration (12) bereitgestellt werden kann. Dabei sind im Aufnahmeraum (26) wenigstens ein erstes Material (M1) und ein zweites Material (M2) angeordnet, welche sich hinsichtlich wenigstens eines Materialkennwerts unterscheiden. Dabei sind das erste Material (M1) und das zweite Material (M2) entlang einer Entleerrichtung (E) des Aufnahmeraums (26) hintereinander angeordnet. Alternativ oder zusätzlich sind das erste Material (M1) und das zweite Material (M2) entlang einer Richtung, die quer zu einer Entleerrichtung (E) verläuft, hintereinander angeordnet. Ferner wird ein Verfahren zum Befüllen eines Materialvorratsbehälters (22) vorgestellt. Auch werden eine Vorrichtung (20) zum additiven Herstellen einer Dentalrestauration (12) sowie ein Verfahren zum additiven Herstellen einer Dentalrestauration (12) erläutert.

## Beschreibung

Die Erfindung ist auf einen Materialvorratsbehälter für Material zur additiven Herstellung einer Dentalrestauration gerichtet. Der Materialvorratsbehälter umfasst einen Aufnahmeraum und einen Bereitstellungsport, der materialleitend mit dem Aufnahmeraum gekoppelt ist, sodass über den Bereitstellungsport Material aus dem Aufnahmeraum zur additiven Herstellung der Dentalrestauration bereitgestellt werden kann.

Zudem betrifft die Erfindung ein Verfahren zum Befüllen eines Materialvorratsbehälters für Material zur additiven Herstellung einer Dentalrestauration.

Auch ist die Erfindung auf eine Vorrichtung zum additiven Herstellen einer Dentalrestauration sowie auf ein Verfahren zum additiven Herstellen einer Dentalrestauration gerichtet.

Derartige Materialvorratsbehälter sowie deren Verwendung in Verfahren und Vorrichtungen zur additiven Herstellung von Dentalrestaurationen sind bekannt. In diesem Zusammenhang ist ein anderer Begriff für die additive Herstellung die generative oder schichtweise Herstellung. Im Zuge derartiger Verfahren wird die herzustellende Dentalrestauration oder, allgemeiner, das herzustellende Bauteil Schicht für Schicht auf einem Substrat oder auf einer Bauplattform aufgebaut. Teilweise werden solche Verfahren auch als 3D-Druck bezeichnet. Insbesondere können unter Nutzung derartiger Verfahren und Vorrichtungen Ersatzzähne, Teile von Ersatzzähnen, sowie Teil- oder Vollprothesen schichtweise hergestellt werden. Das hierfür notwendige Ausgangsmaterial wird mittels eines Materialvorratsbehälters bereitgestellt, wobei für einen Materialvorratsbehälter auch der Begriff Kartusche gängig ist. Dabei wird bei der Herstellung von Dentalrestaurationen stets eine möglichst hohe Originaltreue angestrebt, d.h. die Dentalrestauration soll natürlichen Zähnen und/oder natürlichem Zahnfleisch möglichst ähnlich sein. Allerdings ist es bei bekannten Vorrichtungen und Verfahren so, dass diese tendenziell aufwendiger werden, je höher die Ansprüche an die Originaltreue der Dentalrestauration sind.

Die Aufgabe der vorliegenden Erfindung liegt nunmehr darin, die Originaltreue von schichtweise hergestellten Dentalrestaurationen weiter zu verbessern, d. h. die Herstellung von Dentalrestaurationen mit einem natürlichen Erscheinungsbild zu ermöglichen. Dabei soll jedoch die Herstellung der Dentalrestauration möglichst einfach sein. Mit anderen Worten soll eine möglichst einfache Möglichkeit geschaffen werden, Dentalrestaurationen herzustellen, die natürlichen Zähnen und/oder natürlichem Zahnfleisch möglichst nahekommen.

Die Aufgabe wird durch einen Materialvorratsbehälter für Material zur additiven Herstellung einer Dentalrestauration gelöst. Der Materialvorratsbehälter umfasst einen Aufnahmeraum und einen Bereitstellungsport, der materialleitend mit dem Aufnahmeraum gekoppelt ist, sodass über den Bereitstellungsport Material aus dem Aufnahmeraum zur additiven Herstellung der Dentalrestauration bereitgestellt werden kann. Dabei sind im Aufnahmeraum wenigstens ein erstes Material und ein zweites Material angeordnet, welche sich hinsichtlich wenigstens eines Materialkennwerts unterscheiden. Ferner sind das erste Material und das zweite Material entlang einer Entleerrichtung des Aufnahmeraums hintereinander angeordnet. Alternativ oder zusätzlich sind das erste Material und das zweite Material entlang einer Richtung, die quer zu einer Entleerrichtung verläuft, hintereinander angeordnet. Ein solcher Materialvorratsbehälter kann also gemäß dreier Varianten ausgebildet sein. Gemäß einer ersten Variante sind das erste Material und das zweite Material entlang der Entleerrichtung des Aufnahmeraums hintereinander angeordnet. Gemäß einer zweiten Variante sind das erste Material und das zweite Material entlang einer Richtung, die quer zur Entleerrichtung verläuft, hintereinander angeordnet. Eine dritte Variante betrifft eine Kombination der ersten Variante und der zweiten Variante, d. h. es sind Materialien mit unterschiedlichen Materialkennwerten sowohl entlang der Entleerrichtung des Aufnahmeraums hintereinander angeordnet als auch entlang einer Richtung, die quer zur Entleerrichtung verläuft, hintereinander angeordnet. Um diese Variante mittels zweier Materialien zu realisieren, können die Materialien z. B. schachbrettförmig angeordnet sein. Das bedeutet, dass das erste Material und das zweite Material entlang einer Richtung, die quer zur Entleerrichtung verläuft, hintereinander angeordnet sind. Entlang der Entleerrichtung liegt dann hinter dem ersten Material zweites Material und hinter dem zweiten Material liegt erstes Material. Auch ist es möglich, die dritte Variante mit drei oder mehr Materialien zu realisieren, wobei sich alle Materialien hinsichtlich wenigstens eines Materialkennwerts unterscheiden. In diesem Zusammenhang wird unter der Entleerrichtung eine Richtung verstanden, entlang derer das im Aufnahmeraum aufgenommene Material zum Bereitstellungsport strömt, wenn der Materialvorratsbehälter über den Bereitstellungsport entleert wird, d. h. das im Aufnahmeraum aufgenommene Material zur additiven Herstellung einer Dentalrestauration verwendet wird. Alle drei Varianten erlauben es, eine Dentalrestauration mit hoher Originaltreue herzustellen. Das liegt daran, dass natürliche Zähne und natürliches Zahnfleisch in vielerlei Hinsicht Eigenschaften haben, die lokal unterschiedlich sind. In diesem Zusammenhang kann ein Abschnitt der Dentalrestauration, der natürliches Zahnfleisch nachbildet, auch als Prothesenbasis bezeichnet werden. Das bedeutet, dass diese Eigenschaften sich von Position zu Position auf einem natürlichen Zahn und auf dem natürlichen Zahnfleisch unterscheiden können. Das gilt unter anderem für optische Eigenschaften, insbesondere Farbe und Transluzenz, aber auch für mechanische Eigenschaften, zum Beispiel Härte und Festigkeit, und chemische Eigenschaften, d. h. die Zusammensetzung desjenigen Materials, aus dem natürliche Zähne und natürliches Zahnfleisch bestehen. Diesem Umstand wird durch den erfindungsgemäßen Materialvorratsbehälter Rechnung getragen, der wenigstens ein erstes Material und ein zweites Material, die sich hinsichtlich eines Materialkennwerts unterscheiden, beinhaltet. Es können somit auch in den unter Nutzung des erfindungsgemäßen Materialvorratsbehälters hergestellten Dentalrestaurationen wenigstens das erste Material und das zweite Material verwendet werden, sodass sich auch in der Dentalrestauration die lokal unterschiedlichen Eigenschaften verwirklichen lassen. Insbesondere lassen sich so Dentalrestaurationen herstellen, die einen Farbverlauf von hell nach Dunkel und/oder einen Transparenzverlauf von hoher Transparenz zu niedriger Transparenz aufweisen.

Dentalrestaurationen, zu deren Herstellung der Materialvorratsbehälter verwendet werden kann, umfassen beispielsweise Kronen, Veneers, Brücken, Inlays und Onlays. Auch kann die Dentalrestauration eine Teilprothese sein, welche sowohl wenigstens einen Zahn als auch Zahnfleisch nachbildet.

Ferner schließt die Eignung des Materialvorratsbehälters für die Herstellung einer Dentalrestauration nicht aus, dass der Materialvorratsbehälter auch zur Herstellung von Bauteilen für andere Anwendungen geeignet ist, z. B. zur Herstellung von Sensoren oder Schmuck.

Speziell in der ersten Variante, d. h. in derjenigen Variante, in der das erste Material und das zweite Material entlang der Entleerrichtung hintereinander angeordnet sind, lässt sich bei der Herstellung einer Dentalrestauration mittels des Materialvorratsbehälters zuerst ein Abschnitt der Dentalrestauration herstellen, der aus demjenigen aus erstem Material und zweitem Material gefertigt wird, das näher am Bereitstellungsport vorgesehen ist. Danach kann ein weiterer Abschnitt der Dentalrestauration hergestellt werden, der aus dem jeweils anderen Material gefertigt wird.

Ähnliches gilt speziell für die zweite Variante, d. h. für diejenige Variante, in der das erste Material und das zweite Material entlang einer quer zur Entleerrichtung verlaufenden Richtung hintereinander angeordnet sind. Diese Anordnung impliziert, dass das erste Material und das zweite Material entlang der Entleerrichtung nebeneinander angeordnet sind. Das erste Material und das zweite Material können also im Wesentlichen gleichzeitig über den Bereitstellungsport zur Herstellung einer Dentalrestauration bereitgestellt werden. Dabei können das erste Material und das zweite Material gemischt werden, nachdem sie den Materialvorratsbehälter verlassen haben. Alternativ ist es auch möglich, das erste Material und das zweite Material unvermischt zu einer Dentalrestauration zu verarbeiten. In dieser Variante kommt es darauf an, das erste Material und das zweite Material derart bereitzustellen, dass die entsprechenden Abschnitte der Dentalrestauration im Wesentlichen direkt aus den hinsichtlich des wenigstens einen Materiakennwerts verschiedenen Materialien hergestellt werden können.

Speziell für die dritte Variante gilt, dass unterschiedliche Materialien, d. h. wenigstens das erste Material und das zweite Material, entlang der Entleerrichtung bereitgestellt werden und somit Abschnitte einer Dentalrestauration aus unterschiedlichen Materialien nacheinander hergestellt werden können. Zusätzlich gilt auch für die dritte Variante, dass unterschiedliche Materialien entlang einer quer zur Entleerrichtung verlaufenden Richtung hintereinander angeordnet sind. Wie bereits erwähnt, kann diese Variante mittels zweier Materialien realisiert werden, wenn die Materialien z. B. schachbrettförmig angeordnet sind. Das bedeutet, dass das erste Material und das zweite Material entlang einer Richtung, die quer zur Entleerrichtung verläuft, hintereinander angeordnet sind. Entlang der Entleerrichtung liegt dann hinter dem ersten Material zweites Material und hinter dem zweiten Material liegt erstes Material. Auch ist es möglich, die dritte Variante mit drei oder mehr Materialien zu realisieren, wobei sich alle Materialien hinsichtlich wenigstens eines Materialkennwerts unterscheiden. Es können somit stets erstes Material und zweites Material im Wesentlichen gleichzeitig über den Bereitstellungsport zur Herstellung einer Dentalrestauration bereitgestellt werden. Dabei können das erste Material und das zweite Material gemischt werden, nachdem sie den Materialvorratsbehälter verlassen haben. Alternativ ist es auch möglich, das erste Material und das zweite Material unvermischt zu einer Dentalrestauration zu verarbeiten. Nachdem erstes Material und zweites Material auch entlang der Entleerrichtung hintereinander angeordnet sind, lassen sich unterschiedliche Kombinationen aus erstem Material und zweitem Material, d.h. Kombinationen aus erstem Material und zweiten Material, die sich z. B. hinsichtlich der Anordnung der Materialien unterscheiden, auch zeitlich nacheinander über den Bereitstellungsport zur Herstellung einer Dentalrestauration bereitstellen.

Der wenigstens eine Materialkennwert kann eine optische Materialeigenschaft, insbesondere eine Materialfarbe und/oder eine Transluzenz, eine mechanische Materialeigenschaft oder eine chemische Materialeigenschaft beschreiben. Wie bereits erwähnt, haben auch natürliche Zähne sowie natürliches Zahnfleisch lokal unterschiedliche optische Eigenschaften, mechanische Eigenschaften und chemische Eigenschaften. Dementsprechend können unter Nutzung von wenigstens einem ersten Material und einem zweiten Material, die sich hinsichtlich derartiger Materialeigenschaften unterscheiden, besonders naturgetreue Dentalrestaurationen hergestellt werden. Das gilt in besonderem Maße für die Farbe und die Transluzenz, da natürliche Zähne und natürliches Zahnfleisch jeweils einen Farbverlauf und einen Transluzenzverlauf aufweisen. Hinsichtlich der mechanischen Materialeigenschaften kann eine Dentalrestauration hergestellt werden, die eine vergleichsweise harte und feste, aber spröde, Oberfläche aufweist, und ein vergleichsweise weiches, flexibles und zähes Innenvolumen.

Es versteht sich dabei, dass es selbstverständlich auch möglich ist, dass sich die Materialien im Materialvorratsbehälter hinsichtlich mehrerer Materialkennwerte unterscheiden.

Gemäß einer Variante umfasst der Materialvorratsbehälter ferner einen Ablassport zum Abführen von Material, das nicht zur additiven Herstellung einer Dentalrestauration verwendet werden soll. Diese Konfiguration eröffnet die Möglichkeit, Material abzulassen, nachdem dieses überhaupt nicht oder nur zum Teil dazu verwendet wurde, einen Abschnitt einer Dentalrestauration herzustellen. Das ist insbesondere dann vorteilhaft, wenn ein nachfolgender Abschnitt der Dentalrestauration aus einem anderen Material hergestellt werden soll. Für den Fall, dass das Material überhaupt nicht zum Herstellen einer Dentalrestauration verwendet werden soll, wird somit ein nachfolgend angeordnetes Material verfügbar gemacht. Diese Konfiguration ist insbesondere relevant, wenn wenigstens ein erstes Material und ein zweites Material entlang einer Entleerrichtung hintereinander im Aufnahmeraum angeordnet sind. Insgesamt wird auf diese Weise die Flexibilität bei der Nutzung der im Materialvorratsbehälter enthaltenen Materialien erhöht.

Gemäß einer Ausführungsform können das erste Material und das zweite Material jeweils in Form einer diskreten makroskopischen Schicht angeordnet sein. Alternativ oder zusätzlich sind im Aufnahmeraum eine Vielzahl an Materialien angeordnet, welche sich hinsichtlich wenigstens eines Materialkennwerts unterscheiden. Dabei ist die Vielzahl an Materialien entlang der Entleerrichtung oder quer zur Entleerrichtung des Aufnahmeraums des Aufnahmeraums derart hintereinander angeordnet sind, dass sich makroskopisch ein kontinuierlicher Verlauf des wenigstens einen Materialkennwerts ergibt. Das erste Material und das zweite Material können also einerseits in Form diskreter makroskopischer Schichten angeordnet sein. Das bedeutet, dass es beim Übergang vom ersten Material zum zweiten Material zu einer sprunghaften Änderung des Materialkennwerts innerhalb des Materialvorratsbehälters kommt. Selbiges gilt für die Bereitstellung der Materialien am Bereitstellungsport zur additiven Herstellung einer Dentalrestauration. Alternativ dazu ist eine Vielzahl an Materialien vorhanden, die das erste Material und das zweite Material umfasst. Die Vielzahl der Materialien ist derart im Aufnahmeraum angeordnet, dass sich ein makroskopisch kontinuierlicher Verlauf des wenigstens einen Materialkennwerts ergibt. Das bedeutet, dass es keine sprunghafte Änderung des Materialkennwerts gibt. Mit beiden Varianten lassen sich originalgetreue Dentalrestaurationen herstellen. Dabei eignet sich die Variante mit den diskreten Schichten insbesondere für Herstellungsvarianten, bei denen zunächst ein erster Abschnitt der Dentalrestauration aus einem ersten Material hergestellt werden soll und anschließend ein zweiter Abschnitt der Dentalrestauration aus einem zweiten Material hergestellt werden soll. Die zweite Variante, d. h. die Variante mit makroskopisch kontinuierlichem Verlauf des wenigstens einen Materialkennwerts eignen sich besonders gut, um Dentalrestaurationen herzustellen, bei denen ebenfalls ein makroskopisch kontinuierlicher Verlauf des Materialkennwerts gewünscht ist. Das gilt insbesondere auch für diejenigen Varianten, in denen die Vielzahl der Materialien entlang eine Richtung quer zur Entleerrichtung hintereinander angeordnet sind, sodass sich der kontinuierliche Verlauf des Materialkennwerts entlang einer Richtung quer zur Entleerrichtung ergibt.

Der Materialvorratsbehälter kann ferner ein Trennelement umfassen, das zwischen dem ersten Material und dem zweiten Material angeordnet ist, um das erste Material vom zweiten Material zu separieren. Mittels eines solchen Trennelements kann zuverlässig eine unerwünschte Mischung von erstem Material und zweitem Material vermieden werden. Auf diese Weise kann eine Qualität einer unter Nutzung des Materialvorratsbehälters hergestellten Dentalrestauration und somit auch eine Originaltreue weiter gesteigert werden. Es versteht sich, dass in Fällen, in denen mehr als zwei unterschiedliche Materialien im Aufnahmeraum des Materialvorratsbehälters angeordnet sind, zwischen jedem Paar benachbart angeordneter Materialien ein derartiges Trennelement vorgesehen sein kann. Alternativ ist es auch möglich, lediglich zwischen manchen benachbart angeordneten Materialpaaren ein Trennelement vorzusehen.

Gemäß einer Ausführungsform weist das Trennelement und/oder eine den Aufnahmeraum begrenzende Seitenwand ein Führungselement zum Führen des Trennelements entlang der Entleerrichtung auf. Durch Nutzung eines solchen Führungselements wird verhindert, dass sich das Trennelement beim Entleeren des Materialvorratsbehälters, d. h. bei der Verwendung der im Materialvorratsbehälter vorhandenen Materialien zur Herstellung einer Dentalrestauration, das Trennelement in unerwünschter Weise oder in unerwünschte Stellungen bewegt, sich zum Beispiel verkeilt oder anderweitig seine Trennwirkung verliert.

In einem Beispiel ist das Führungselement als entlang der Entleerrichtung verdickter Abschnitt eines Randes des Trennelements ausgeführt. Auf diese Weise wird zuverlässig verhindert, dass sich das Trennelement bezüglich der Entleerrichtung verkippt.

Gemäß einer anderen Ausführungsform ist die Führungskontur in einer Seitenwand des Aufnahmeraums ausgebildet. Auf diese Weise kann zuverlässig eine unerwünschte Bewegung des Trennelements vermieden werden.

In einem Beispiel kann das Trennelement eine Folie oder eine Membran oder ein feststehendes Wandelement umfassen. Derartige Trennelemente sind einerseits besonders kompakt, da sie insbesondere entlang der Entleerrichtung vergleichsweise dünn ausgeführt werden können. Gleichzeitig können derartige Trennelemente ein zuverlässiges Separieren des ersten Materials und des zweiten Materials sicherstellen. Bei Materialien, die entlang einer Richtung hintereinander angeordnet sind, die quer zur Entleerrichtung verläuft, kann ein feststehendes Wandelement für eine einfache und zuverlässige Separierung der Materialien sorgen.

Gemäß einer Variante kann der Materialvorratsbehälter ferner ein Perforationselement zum Aufbrechen des Trennelements umfassen. Es versteht sich, dass spätestens in einer Betriebssituation, in der das entlang der Entleerrichtung hinter dem Trennelement liegende Material zum Herstellen einer Dentalrestauration verwendet werden soll, eine Möglichkeit geschaffen werden muss, dieses Material über den Bereitstellungsport aus dem Materialvorratsbehälter zu entnehmen. Hierzu muss die Trennwirkung des Trennelements aufgehoben werden, zum Beispiel indem dieses aufgebrochen wird. Dies lässt sich vergleichsweise einfach und zuverlässig durch eine passende Perforationskontur, zum Beispiel eine passende Spitze oder ein passendes Zackenmuster im Inneren des Aufnahmeraums realisieren.

Außerdem wird die Aufgabe durch ein Verfahren zum Befüllen eines Materialvorratsbehälters für Material zur additiven Herstellung einer Dentalrestauration gelöst. Das Verfahren umfasst ein Einbringen eines ersten Materials und eines zweiten Materials in einen Aufnahmeraum des Materialvorratsbehälters. Dabei unterscheiden sich das erste Material und das zweite Material hinsichtlich wenigstens eines Materialkennwerts. Ferner werden das erste Material und das zweite Material entlang einer Entleerrichtung des Materialvorratsbehälters hintereinander angeordnet. Alternativ oder zusätzlich werden das erste Material und das zweite Material entlang einer Richtung, die quer zu einer Entleerrichtung verläuft, hintereinander angeordnet. Das Befüllen des Materialvorratsbehälters umfasst also drei Varianten. In einer ersten Variante werden das erste Material und das zweite Material entlang der Entleerrichtung hintereinander angeordnet. In einer zweiten Variante werden das erste Material und das zweite Material entlang eine Richtung, die quer zur Entleerrichtung verläuft, hintereinander angeordnet. Eine dritte Variante ist eine Kombination der ersten Variante und der zweiten Variante. Um diese Variante mittels zweier Materialien zu realisieren, können die Materialien z. B. schachbrettförmig angeordnet werden. Das bedeutet, dass das erste Material und das zweite Material entlang einer Richtung, die quer zur Entleerrichtung verläuft, hintereinander angeordnet werden. Entlang der Entleerrichtung wird dann hinter dem ersten Material zweites Material und hinter dem zweiten Material erstes Material angeordnet. Auch ist es möglich, die dritte Variante mit drei oder mehr Materialien zu realisieren, wobei sich alle Materialien hinsichtlich wenigstens eines Materialkennwerts unterscheiden. Materialien, die entlang der Entleerrichtung hintereinander angeordnet sind, müssen zwangsläufig zeitlich nacheinander in den Aufnahmeraum eingebracht werden. Materialien, die entlang einer Richtung, welche quer zur Entleerrichtung verläuft, hintereinander angeordnet sind, können entweder gleichzeitig oder zeitlich nacheinander in den Aufnahmeraum eingebracht werden. Es lässt sich somit ein Materialvorratsbehälter erstellen, mittels dem sich originalgetreue Dentalrestaurationen herstellen lassen, wie bereits erläutert. Insbesondere lassen sich so Dentalrestaurationen herstellen, die einen Farbverlauf von hell nach Dunkel und/oder einen Transparenzverlauf von hoher Transparenz zu niedriger Transparenz aufweisen.

Dentalrestaurationen, zu deren Herstellung der Materialvorratsbehälter verwendet werden kann, umfassen beispielsweise Kronen, Veneers, Brücken, Inlays und Onlays. Auch kann die Dentalrestauration eine Teilprothese sein, welche sowohl wenigstens einen Zahn als auch Zahnfleisch nachbildet.

Ferner schließt die Eignung des Materialvorratsbehälters für die Herstellung einer Dentalrestauration nicht aus, dass der Materialvorratsbehälter auch zur Herstellung von Bauteilen für andere Anwendungen geeignet ist, z. B. zur Herstellung von Sensoren oder Schmuck.

Gemäß einer Variante umfasst das Verfahren ferner ein Reduzieren einer Viskosität des ersten Materials und/oder des zweiten Materials vor dem Einbringen in den Aufnahmeraum. Eine reduzierte Viskosität erhöht die Fließfähigkeit der Materialien und erleichtert somit das Einbringen der Materialien in den Aufnahmeraum. Beispielsweise kann die Viskosität durch Erwärmen der Materialien reduziert werden.

Gemäß einer Variante, in der wenigstens zwei Materialien zeitlich nacheinander in den Aufnahmeraum eingebracht werden, kann stets eine Viskosität desjenigen Materials reduziert werden, zum Beispiel durch Erwärmen, das in den Aufnahmeraum eingebracht werden soll. Dabei kann darauf geachtet werden, dass sich eine Viskosität eines zuvor eingebrachten Materials wieder erhöht, bevor das nachfolgende Material eingebracht wird. Dies kann beispielsweise dadurch erfolgen, dass man das zuerst eingebrachte Material über einen gewissen Zeitraum abkühlen lässt. Selbstverständlich ist es dabei auch möglich, das zuerst eingebrachte Material aktiv zu kühlen, um die Viskosität wieder zu erhöhen. Auf diese Weise lässt sich insbesondere auch ohne Verwendung von Trennelementen eine präzise Trennung der Materialien innerhalb des Aufnahmeraums aufrechterhalten oder schaffen.

Außerdem wird die Aufgabe durch eine Vorrichtung zum additiven Herstellen einer Dentalrestauration gelöst. die Vorrichtung umfasst einen Bauraum zum additiven Aufbauen der Dentalrestauration und einen erfindungsgemäßen Materialvorratsbehälter, der materialleitend mit dem Bauraum gekoppelt ist. Insbesondere umfasst die Vorrichtung einen Ablassport zum Abführen von Material, das nicht zur additiven Herstellung einer Dentalrestauration verwendet werden soll. Hinsichtlich des Materialvorratsbehälters bestehen dabei wieder die bereits erläuterten drei Varianten. Gemäß einer ersten Variante sind das erste Material und das zweite Material entlang einer Entleerrichtung des Aufnahmeraums hintereinander angeordnet. Gemäß einer zweiten Variante sind das erste Material und das zweite Material entlang einer Richtung, die quer zu einer Entleerrichtung verläuft, hintereinander angeordnet. Eine dritte Variante betrifft eine Kombination der ersten Variante und der zweiten Variante, d. h. es sind Materialien mit unterschiedlichen Materialkennwerten sowohl entlang der Entleerrichtung des Aufnahmeraums hintereinander angeordnet, als auch entlang eine Richtung, die quer zu einer Entleerrichtung verläuft, hintereinander angeordnet. Um diese Variante mittels zweier Materialien zu realisieren, können die Materialien z. B. schachbrettförmig angeordnet sein. Das bedeutet, dass das erste Material und das zweite Material entlang einer Richtung, die quer zur Entleerrichtung verläuft, hintereinander angeordnet sind. Entlang der Entleerrichtung liegt dann hinter dem ersten Material zweites Material und hinter dem zweiten Material liegt erstes Material. Auch ist es möglich, die dritte Variante mit drei oder mehr Materialien zu realisieren, wobei sich alle Materialien hinsichtlich wenigstens eines Materialkennwerts unterscheiden. In diesem Zusammenhang wird unter der Entleerrichtung eine Richtung verstanden, entlang derer das im Aufnahmeraum aufgenommene Material zum Bereitstellungsport strömt, wenn der Materialvorratsbehälter über den Bereitstellungsport entleert wird, d. h. das im Aufnahmeraum aufgenommene Material zur additiven Herstellung einer Dentalrestauration verwendet wird. Alle drei Varianten erlauben es, eine Dentalrestauration mit hoher Originaltreue herzustellen. Das liegt daran, dass natürliche Zähne und natürliches Zahnfleisch in vielerlei Hinsicht Eigenschaften haben, die lokal unterschiedlich sind. In diesem Zusammenhang kann ein Abschnitt der Dentalrestauration, der natürliches Zahnfleisch nachbildet, auch als Prothesenbasis bezeichnet werden. Das bedeutet, dass die Eigenschaften sich von Position zu Position auf einem natürlichen Zahn und auf dem natürlichen Zahnfleisch unterscheiden können. Das gilt unter anderem für optische Eigenschaften, insbesondere Farbe und Transluzenz, aber auch für mechanische Eigenschaften, zum Beispiel Härte und Festigkeit, und chemische Eigenschaften, d. h. die Zusammensetzung desjenigen Materials, aus dem natürliche Zähne und natürliches Zahnfleisch bestehen. Diesem Umstand wird durch den erfindungsgemäßen Materialvorratsbehälter und die erfindungsgemäße Vorrichtung, die diesen umfasst, Rechnung getragen. Es können somit auch in den unter Nutzung der erfindungsgemäßen Vorrichtung hergestellten Dentalrestaurationen wenigstens das erste Material und das zweite Material verwendet werden, sodass sich auch in der Dentalrestauration die lokal unterschiedlichen Eigenschaften verwirklichen lassen. Insbesondere lassen sich so Dentalrestaurationen herstellen, die einen Farbverlauf von hell nach Dunkel und/oder einen Transparenzverlauf von hoher Transparenz zu niedriger Transparenz aufweisen.

Dentalrestaurationen, zu deren Herstellung die Vorrichtung verwendet werden kann, umfassen beispielsweise Kronen, Veneers, Brücken, Inlays und Onlays. Auch kann die Dentalrestauration eine Teilprothese sein, welche sowohl wenigstens einen Zahn als auch Zahnfleisch nachbildet.

Ferner schließt die Eignung der Vorrichtung für die Herstellung einer Dentalrestauration nicht aus, dass der Materialvorratsbehälter auch zur Herstellung von Bauteilen für andere Anwendungen geeignet ist, z. B. zur Herstellung von Sensoren oder Schmuck.

Hinsichtlich des Ablassports umfasst die erfindungsgemäße Vorrichtung zwei Varianten. Entweder ist der Ablassport am Materialvorratsbehälter vorgesehen, d.h. der Materialvorratsbehälter umfasst den Ablassport. Alternativ ist der Ablassport an der Vorrichtung vorgesehen. In diesem Fall kann der Materialvorratsbehälter ohne Ablassport ausgeführt sein. In beiden Varianten kann mittels des Ablassports Material abgeführt werden, das nicht zur additiven Herstellung einer Dentalrestauration verwendet werden soll. Diese Konfiguration eröffnet die Möglichkeit, Material abzulassen, nachdem dieses überhaupt nicht oder nur zum Teil dazu verwendet wurde, einen Abschnitt einer Dentalrestauration herzustellen. Das ist insbesondere dann vorteilhaft, wenn ein nachfolgender Abschnitt der Dentalrestauration aus einem anderen Material hergestellt werden soll. Für den Fall, dass das Material überhaupt nicht zum Herstellen einer Dentalrestauration verwendet werden soll, wird somit ein nachfolgend angeordnetes Material verfügbar gemacht. Diese Konfiguration ist insbesondere relevant, wenn wenigstens ein erstes Material und ein zweites Material entlang einer Entleerrichtung hintereinander im Aufnahmeraum angeordnet sind.

Die Aufgabe wird auch durch ein Verfahren zum additiven Herstellen einer Dentalrestauration gelöst. das Verfahren umfasst:
- Erstellen einer ersten Bauteilschicht der Dentalrestauration aus einem ersten Material, und anschließendes Erstellen einer zweiten Bauteilschicht der Dentalrestauration aus einem zweiten Material, und/oder
- Erstellen einer Bauteilschicht aus dem ersten Material und aus dem zweiten Material,

Dabei unterscheiden sich das erste Material und das zweite Material hinsichtlich wenigstens eines Materialkennwerts. Ferner werden das erste Material und das zweite Material mittels desselben Materialvorratsbehälters bereitgestellt. In der ersten Alternative des Verfahrens werden also Bauteilschichten der Dentalrestauration, die zeitlich nacheinander erstellt werden, aus Materialien mit wenigstens einem unterschiedlichen Materialkennwert hergestellt. In der zweiten Alternative des Verfahrens werden zwei Materialien, die sich hinsichtlich wenigstens eines Materialkennwerts unterscheiden, zum Erstellen derselben Bauteilschicht verwendet. Das bedeutet, dass ein erster Abschnitt dieser Bauteilschicht aus dem ersten Material erstellt wird und ein zweiter Abschnitt Bauteilschicht aus dem zweiten Material. Mittels eines derartigen Verfahrens können Dentalrestaurationen mit hoher Originaltreue hergestellt werden. Das liegt daran, dass natürliche Zähne und natürliches Zahnfleisch in vielerlei Hinsicht Eigenschaften haben, die lokal unterschiedlich sind. In diesem Zusammenhang kann ein Abschnitt der Dentalrestauration, der natürliches Zahnfleisch nachbildet, auch als Prothesenbasis bezeichnet werden. Das bedeutet, dass die Eigenschaften sich von Position zu Position auf einem natürlichen Zahn und auf dem natürlichen Zahnfleisch unterscheiden können. Das gilt unter anderem für optische Eigenschaften, insbesondere Farbe und Transluzenz, aber auch für mechanische Eigenschaften, zum Beispiel Härte und Festigkeit, und chemische Eigenschaften, d. h. die Zusammensetzung desjenigen Materials, aus dem natürliche Zähne und natürliches Zahnfleisch bestehen. Diesem Umstand wird durch das Verfahren Rechnung getragen, bei dem wenigstens ein erstes Material und ein zweites Material, die sich hinsichtlich wenigstens eines Materialkennwerts unterscheiden, verwendet werden. Insbesondere lassen sich so Dentalrestaurationen herstellen, die einen Farbverlauf von hell nach Dunkel und/oder einen Transparenzverlauf von hoher Transparenz zu niedriger Transparenz aufweisen. Darüber hinaus ist das erfindungsgemäße Verfahren vergleichsweise einfach, da das erste Material und das zweite Material mittels desselben Materialvorratsbehälters bereitgestellt werden.

Im Zusammenhang mit dem erfindungsgemäßen Verfahren zum additiven Herstellen einer Dentalrestauration kann die Dentalrestauration beispielsweise eine Krone, ein Veneer, eine Brücke, ein Inlay oder ein Onlay sein. Auch kann die Dentalrestauration eine Teilprothese sein, welche sowohl wenigstens einen Zahn als auch Zahnfleisch nachbildet.

Das Erfindungsgemäße Verfahren lässt sich alternativ auch nutzen, um Bauteile für andere Anwendungen herzustellen, z. B. zur Herstellung von Sensoren oder Schmuck.

Das erfindungsgemäße Verfahren zum additiven Herstellen einer Dentalrestauration kann insbesondere unter Nutzung eines erfindungsgemäßen Materialvorratsbehälters ausgeführt werden. Wie bereits erwähnt, kann der erfindungsgemäße Materialvorratsbehälters gemäß einer ersten Variante ausgeführt sein, bei der das erste Material und das zweite Material entlang einer Entleerrichtung des Aufnahmeraums hintereinander angeordnet sind. Ein solcher Materialvorratsbehälter eignet sich besonders gut in Kombination mit der ersten Alternative des erfindungsgemäßen Verfahrens zum additiven Herstellen einer Dentalrestauration, d. h. derjenigen Alternative des Verfahrens, bei der Bauteilschichten der Dentalrestauration, die zeitlich nacheinander erstellt werden, aus Materialien mit wenigstens einem unterschiedlichen Materialkennwert hergestellt werden. Wie ebenfalls bereits erwähnt, kann der erfindungsgemäße Materialvorratsbehälter gemäß einer zweiten Variante ausgeführt sein. Dann sind das erste Material und das zweite Material entlang eine Richtung, die quer zu einer Entleerrichtung verläuft, hintereinander angeordnet. Diese Variante des erfindungsgemäßen Materialvorratsbehälters eignet sich besonders gut zum Ausführen der zweiten Alternative des Verfahrens zum additiven Herstellen der Dentalrestauration, bei der zwei Materialien, die sich hinsichtlich wenigstens eines Materialkennwerts unterscheiden, zum Erstellen derselben Bauteilschicht verwendet. Die ebenfalls bereits erläuterte dritte Variante des erfindungsgemäßen Materialvorratsbehälters eignet sich zudem besonders gut für einen Fall, in dem die erste Alternative des Verfahrens zum additiven Herstellen einer Dentalrestauration und die zweite Alternative des Verfahrens zum Herstellen der Dentalrestauration kombiniert sind.

Der wenigstens eine Materialkennwert kann eine optische Materialeigenschaft, insbesondere eine Materialfarbe und/oder eine Transluzenz, eine mechanische Materialeigenschaft oder eine chemische Materialeigenschaft beschreiben. Wie bereits erwähnt, haben auch natürliche Zähne sowie natürliches Zahnfleisch lokal unterschiedliche optische Eigenschaften, mechanische Eigenschaften und chemische Eigenschaften. Dementsprechend können unter Nutzung von wenigstens einem ersten Material und einem zweiten Material, die sich hinsichtlich derartiger Materialeigenschaften unterscheiden, besonders naturgetreue Dentalrestaurationen hergestellt werden. Das gilt in besonderem Maße für die Farbe und die Transluzenz, da natürliche Zähne und natürliches Zahnfleisch jeweils einen Farbverlauf und einen Transluzenzverlauf aufweisen.

Gemäß einer Variante umfasst das Verfahren ferner ein Ablassen von erstem Material und/oder zweitem Material, das nicht zur Herstellung der Dentalrestauration verwendet wird. Somit kann erstes Material und/oder zweites Material abgeführt werden, das nicht zur additiven Herstellung einer Dentalrestauration verwendet werden soll. Dies eröffnet die Möglichkeit, Material abzulassen, nachdem dieses überhaupt nicht oder nur zum Teil dazu verwendet wurde, einen Abschnitt einer Dentalrestauration herzustellen. Das ist insbesondere dann vorteilhaft, wenn ein nachfolgender Abschnitt der Dentalrestauration aus einem anderen Material hergestellt werden soll. Für den Fall, dass das Material überhaupt nicht zum Herstellen einer Dentalrestauration verwendet werden soll, wird somit ein nachfolgend angeordnetes Material verfügbar gemacht. Diese Konfiguration ist insbesondere relevant, wenn wenigstens ein erstes Material und ein zweites Material entlang einer Entleerrichtung hintereinander im Aufnahmeraum angeordnet sind.

Gemäß einer Option kann abgelassenes erstes Material und/oder abgelassenes zweites Material in einem Aufnahmebehälter aufgefangen werden. Es versteht sich dabei, dass sich die Reihenfolge des ersten Materials und des zweiten Materials dabei im Aufnahmebehälter im Vergleich zum Materialvorratsbehälter umgekehrt. Je nach Material kann dabei durch Verwenden eines Aufnahmebehälters eine Wiederverwendbarkeit oder eine Entsorgung von nicht zum additiven Herstellen der Dentalrestauration verwendeten Materialien begünstigt oder ermöglicht werden.

Es versteht sich, dass in einem Fall, in dem das Verfahren zur additiven Herstellung der Dentalrestauration gemäß der zweiten Alternative ausgeführt wird, d.h. ein erster Abschnitt einer Bauteilschicht aus dem ersten Material erstellt wird und ein zweiter Abschnitt derselben Bauteilschicht aus dem zweiten Material, eine Grenze zwischen dem ersten Material und dem zweiten Material oder ein Verlauf des Materialkennwerts in demjenigen Raum feststehen kann, in dem die Dentalrestauration hergestellt werden soll, d.h. im Bauraum. Dabei lassen sich die gewünschten unterschiedlichen Materialkennwerte oder der gewünschte Verlauf des Materialkennwerts innerhalb der Dentalrestauration auch dadurch erreichen oder zumindest beeinflussen, dass die herzustellende Dentalrestauration relativ zur Grenze zwischen dem ersten Material und dem zweiten Material oder relativ zum räumlich feststehenden Verlauf des Materialkennwerts so positioniert wird, dass sich die gewünschten Eigenschaften ergeben.

Im Zusammenhang mit allen Aspekten der vorliegenden Erfindung, d.h. im Zusammenhang mit einem erfindungsgemäßen Materialvorratsbehälter, einem erfindungsgemäßen Verfahren zum Befüllen eines Materialvorratsbehälters, einer erfindungsgemäßen Vorrichtung zum additiven Herstellen einer Dentalrestauration und einem erfindungsgemäßen Verfahren zum additiven Herstellen einer Dentalrestauration müssten alle Materialien, d.h. wenigstens das erste Material und das zweite Material, zumindest während deren Verarbeitung fließfähig sein. Insbesondere sind dabei die verwendeten Materialien zumindest während deren Verarbeitung Flüssigkeiten, wobei sich die Viskositäten der Materialien im Wesentlichen gleich, ähnlich oder unterschiedlich sein können. In einer anderen Variante können die Materialien pastenförmig sein, d.h. bei einer Temperatur von 23°C eine deutlich höhere Viskosität als flüssiges Wasser aufweisen. Optional ist es dabei denkbar, die Materialien bei Bedarf aufzuheizen, um die Viskosität zu senken.

Materialen zur stereolithographischen Verarbeitung werden vorzugsweise so eingestellt, dass ihre Viskosität, abhängig von der Materialtemperatur während des Verarbeitungsprozesses, im Bereich von 100 mPa*s bis 100 Pa*s, bevorzugt 250 mPa*s bis 50 Pa*s, besonders bevorzugt 500 mPa*s bis 49 Pa*s, liegt. Die Materialtemperatur während des Verarbeitungsprozesses liegt vorzugsweise im Bereich von 10°C bis 70°C, besonders bevorzugt 20°C bis 65°C oder 30°C bis 60°C.

In diesem Zusammenhang wird die Viskosität üblicherweise bei 23°C, d.h. bei Raumtemperatur, mit einem Platten-Platten-Viskosimeter bestimmt (Scherrate 10/s). Es versteht sich, dass Merkmale, Effekte und/oder Vorteile, die im Zusammenhang mit einem aus erfindungsgemäßem Materialvorratsbehälter, erfindungsgemäßem Verfahren zum Befüllen eines Materialvorratsbehälters, erfindungsgemäßer Vorrichtung zum additiven Herstellen einer Dentalrestauration und erfindungsgemäßem Verfahren zum additiven Herstellen einer Dentalrestauration erwähnt wurden, auch für die jeweils anderen aus erfindungsgemäßem Materialvorratsbehälter, erfindungsgemäßem Verfahren zum Befüllen eines Materialvorratsbehälters, erfindungsgemäßer Vorrichtung zum additiven Herstellen einer Dentalrestauration und erfindungsgemäßem Verfahren zum additiven Herstellen einer Dentalrestauration gelten.

Die Erfindung wird nachstehend anhand verschiedener Ausführungsbeispiele erläutert, die in den beigefügten Zeichnungen gezeigt sind. Es zeigen:
- Figur 1: ein erstes Beispiel einer erfindungsgemäßen Vorrichtung zum additiven Herstellen einer Dentalrestauration in einem ersten Betriebszustand, wobei die Vorrichtung einen erfindungsgemäßen Materialvorratsbehälter umfasst und wobei mittels der Vorrichtung ein erfindungsgemäßes Verfahren zum additiven Herstellen einer Dentalrestauration ausgeführt wird,
- Figur 2: die Vorrichtung aus Figur 1 in einem zweiten Betriebszustand,
- Figur 3: ein zweites Beispiel einer erfindungsgemäßen Vorrichtung zum additiven Herstellen einer Dentalrestauration in einem ersten Betriebszustand,
- Figur 4: die Vorrichtung aus Figur 3 in einem zweiten Betriebszustand,
- Figur 5: ein drittes Beispiel einer erfindungsgemäßen Vorrichtung zum additiven Herstellen einer Dentalrestauration in einem ersten Betriebszustand,
- Figur 6: die Vorrichtung aus Figur 5 in einem zweiten Betriebszustand,
- Figur 7: einen Schnitt durch die Vorrichtung aus Figur 5 entlang der Ebene VII-VII,
- Figur 8: einen Schnitt durch die Vorrichtung aus Figur 6 entlang der Ebene VIII-VIII,
- Figur 9: ein viertes Beispiel einer erfindungsgemäßen Vorrichtung zum additiven Herstellen einer Dentalrestauration in einem ersten Betriebszustand,
- Figur 10: die Vorrichtung aus Figur 9 in einem zweiten Betriebszustand,
- Figur 11: einen Schnitt durch die Vorrichtung aus Figur 9 entlang der Ebene XI-XI,
- Figur 12: einen Schnitt durch die Vorrichtung aus Figur 10 entlang der Ebene XII-XII,
- Figur 13: einen Schnitt durch die Vorrichtung aus Figur 10 entlang der Ebene XIII-XIII,
- Figur 14: ein fünftes Beispiel einer erfindungsgemäßen Vorrichtung zum additiven Herstellen einer Dentalrestauration in einem ersten Betriebszustand,
- Figur 15: die Vorrichtung aus Figur 14 in einem zweiten Betriebszustand,
- Figur 16: ein sechstes Beispiel einer erfindungsgemäßen Vorrichtung zum additiven Herstellen einer Dentalrestauration in einem ersten Betriebszustand,
- Figur 17: die Vorrichtung aus Figur 16 in einem zweiten Betriebszustand,
- Figur 18: ein siebtes Beispiel einer erfindungsgemäßen Vorrichtung zum additiven Herstellen einer Dentalrestauration in einem ersten Betriebszustand,
- Figur 19: die Vorrichtung aus Figur 18 in einem zweiten Betriebszustand,
- Figur 20: die Vorrichtung aus Figur 18 in einem dritten Betriebszustand,
- Figur 21: die Vorrichtung aus Figur 18 in einem vierten Betriebszustand,
- Figur 22: die Vorrichtung aus Figur 18 in einem fünften Betriebszustand,
- Figur 23: ein achtes Beispiel einer erfindungsgemäßen Vorrichtung zum additiven Herstellen einer Dentalrestauration in einem ersten Betriebszustand,
- Figur 24: die Vorrichtung aus Figur 23 in einem zweiten Betriebszustand,
- Figur 25: ein neuntes Beispiel einer erfindungsgemäßen Vorrichtung zum additiven Herstellen einer Dentalrestauration in einem ersten Betriebszustand,
- Figur 26: die Vorrichtung aus Figur 25 in einem zweiten Betriebszustand,
- Figur 27: ein zehntes Beispiel einer erfindungsgemäßen Vorrichtung zum additiven Herstellen einer Dentalrestauration in einem ersten Betriebszustand,
- Figur 28: die Vorrichtung aus Figur 27 in einem zweiten Betriebszustand,
- Figur 29: ein elftes Beispiel einer erfindungsgemäßen Vorrichtung zum additiven Herstellen einer Dentalrestauration in einem ersten Betriebszustand,
- Figur 30: die Vorrichtung aus Figur 29 in einem zweiten Betriebszustand,
- Figur 31: ein zwölftes Beispiel einer erfindungsgemäßen Vorrichtung zum additiven Herstellen einer Dentalrestauration in einem ersten Betriebszustand,
- Figur 32: die Vorrichtung aus Figur 31 in einem zweiten Betriebszustand,
- Figuren 33 bis 35: verschiedene Betriebszustände einer Variante eines erfindungsgemäßen Materialvorratsbehälters, der Trennelemente aufweist,
- Figuren 36 bis 38: verschiedene Betriebszustände einer anderen Variante eines erfindungsgemäßen Materialvorratsbehälters, der Trennelemente aufweist,
- Figuren 40 bis 42: verschiedene Betriebszustände einer weiteren Variante eines erfindungsgemäßen Materialvorratsbehälters, der Trennelemente aufweist,
- Figuren 43 bis 46: eine Illustration eines erfindungsgemäßen Verfahrens zum Befüllen eines Materialvorratsbehälters, und
- Figuren 47 und 48: ein dreizehntes Beispiel einer erfindungsgemäßen Vorrichtung zum additiven Herstellen einer, wobei die Vorrichtung einen erfindungsgemäßen Materialvorratsbehälter umfasst und wobei mittels der Vorrichtung ein erfindungsgemäßes Verfahren zum additiven Herstellen einer Dentalrestauration ausgeführt werden kann.

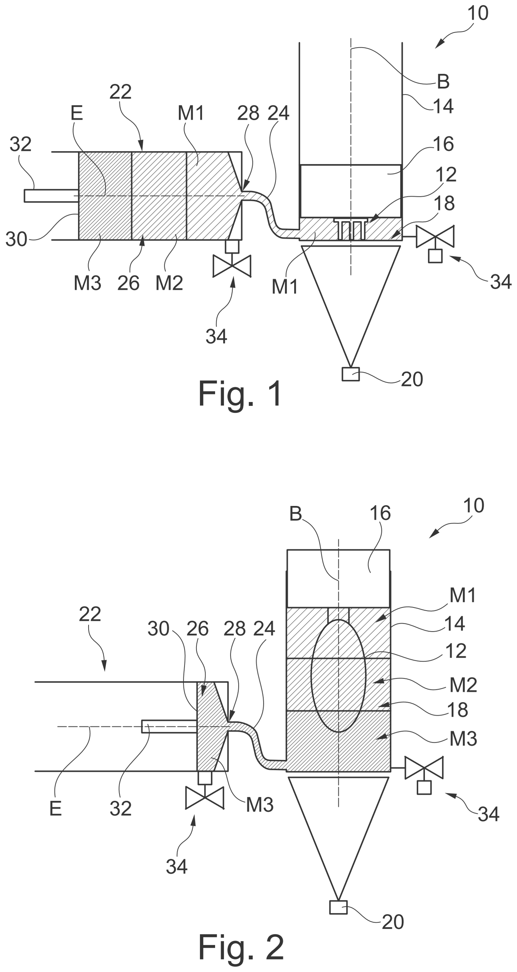

Figur 1 und 2 zeigen erstes Beispiel einer Vorrichtung 10 zum additiven Herstellen einer Dentalrestauration 12. Dabei zeigt die Figur 1 einen ersten Betriebszustand, der mit einem Beginn der additiven Herstellung der Dentalrestauration 12 zusammenfällt und die Figur 2 einer zweiten Betriebszustand, der mit einem Ende der additiven Herstellung der Dentalrestauration 12 zusammenfällt.

Es versteht sich, dass in den Figuren die Dentalrestauration 12 lediglich schematisch dargestellt ist. Beispielsweise handelt es sich bei der Dentalrestauration 12 um eine Krone.

Die Vorrichtung 10 umfasst ein Bauraumgehäuse 14, das die Form eines einseitig geschlossenen Zylinders hat, der sich entlang einer Baurichtung B erstreckt.

Im Inneren des Bauraumgehäuses 14 ist eine Bauplattform 16 geführt, sodass sich die Bauplattform 16 entlang der Baurichtung B bewegen, d.h. verschieben, lässt.

Das Bauraumgehäuse 14 und die Bauplattform 16 begrenzen somit einen Bauraum 18, in dem die Dentalrestauration 12 hergestellt werden kann, wie später noch im Detail erläutert werden wird. Der Bauraum 18 ist somit auch im Wesentlichen zylindrisch, im dargestellten Beispiel kreiszylindrisch, wobei eine zugehörige Zylinderachse mit der Baurichtung B zusammenfällt. Es versteht sich, dass in anderen Beispielen auch andere Querschnittsformen möglich sind.

Ferner ist das geschlossene Ende des Bauraumgehäuses 14 zumindest abschnittsweise transparent ausgeführt. Dabei ist eine lediglich schematisch dargestellt Belichtungseinheit 20 am geschlossenen Ende des Bauraumgehäuses 14, jedoch außerhalb des Bauraums 18, angeordnet.

Die Vorrichtung 10 umfasst zudem einen Materialvorratsbehälter 22, der materialleitend mit dem Bauraum 18 gekoppelt ist. In der dargestellten Ausführungsform sind der Materialvorratsbehälter 22 und der Bauraum 18 über eine Leitung 24 materialleitend gekoppelt.

Dabei weist der Materialvorratsbehälter 22 einen Aufnahmeraum 26 auf, der im Wesentlichen zylindrisch, zum Beispiel kreiszylindrisch, ist und sich entlang einer Zylinderachse erstreckt. An einem ersten Ende des Aufnahmeraums 26 ist zentral ein Bereitstellungsport 28 angeordnet, der materialleitend mit dem Aufnahmeraum 26 gekoppelt ist, sodass über den Bereitstellungsport 28 Material aus dem Aufnahmeraum 26 zur additiven Herstellung der Dentalrestauration 12 bereitgestellt werden kann. Im dargestellten Beispiel ist die Leitung 24 an den Bereitstellungsport 28 angeschlossen.

Auf einer dem Bereitstellungsport 28 entgegengesetzten Stirnseite des zylindrischen Aufnahmeraums 26 ist der Aufnahmeraum 26 durch eine bewegbare Wand 30 begrenzt. Diese bewegbare Wand ist mit einem lediglich schematisch dargestellten Antrieb 32 gekoppelt, sodass sich durch Bewegen der Wand 30 in Richtung zum Bereitstellungsport 28 Material aus dem Aufnahmeraum 26 herausdrücken lässt. Diejenige Richtung, entlang der sich die Wand 30 bewegen lässt, wird daher auch als Entleerrichtung E bezeichnet. Die Entleerrichtung E fällt mit der Zylinderachse des zylindrischen Aufnahmeraums 26 im Wesentlichen zusammen. Aufgrund der Kopplung des Materialvorratsbehälters 22 und des Bauraums 18 über die Leitung 24 wird auf diese Weise Material im Bauraum 18 bereitgestellt.

Die in den Figuren dargestellte Vorrichtung 10 zum additiven Herstellen einer Dentalrestauration 12 funktioniert nach dem Prinzip der Stereolithographie. Das bedeutet, dass die Dentalrestauration 12 schichtweise aufgebaut wird, indem durch Betätigung des Antriebs 32 und Verschiebung der Wand 30 Material für eine Bauteilschicht vom Materialvorratsbehälter 22 in den Bauraum 18 eingebracht wird. Gleichzeitig wird die Bauplattform derart bewegt, dass ein Volumeninkrement, das aus der Verschiebung der Wand 30 resultiert, einem Volumeninkrement entspricht, dass aus der Verschiebung der Bauplattform 16 entspricht. Dabei stellt die Vorrichtung 10 ein sogenanntes geschlossenes System dar, bei dem die zum additiven Herstellen der Dentalrestauration 12 verwendeten Materialien mittels Komponenten der Vorrichtung 10 stets von einer Umgebung, insbesondere von Umgebungsluft, abgeschirmt sind. Aufgrund der Geschlossenheit des Systems sind dabei auch die Bauplattform 16 und die Wand 30 über die im Bauraum 18 und/oder im Materialvorratsbehälter 22 vorhandenen Materialien hydraulisch gekoppelt. Aufgrund dieser Konfiguration kann die Bauplattform 16 lediglich beweglich gelagert sein, jedoch ohne eigenen Antrieb auskommen. Die Bauplattform 16 wird dann mittelbar durch den Antrieb 32 und die hydraulische Kopplung angetrieben.

Für den Fall, dass die Vorrichtung 10 einen später noch im Detail erläuterten, optionalen Ablassport 34 aufweist, kann es zudem nötig sein, dass sich die Bauplattform 16 arretieren lässt, d.h. gezielt an einer Bewegung hindern lässt. Dadurch wird beim Ablassen von Material durch den Ablassport 34 eine Bewegung der Bauplattform 16 verhindert.

Sodann wird das Material der Bauteilschicht ortsspezifisch mittels der Belichtungseinheit 20 ausgehärtet. Dieses Vorgehen wird so oft wiederholt, bis die Dentalrestauration 12 aus einer Vielzahl an Bauteilschichten vollständig hergestellt ist.

Im Beispiel der Figur 1 sind im Aufnahmeraum 26 insgesamt drei Materialien angeordnet, d. h. ein erstes Material M1, ein zweites Material M2 und ein drittes Material M3.

Diese Materialien M1, M2, M3 unterscheiden sich hinsichtlich wenigstens eines Materialkennwerts, der eine optische Materialeigenschaft, insbesondere eine Materialfarbe und/oder eine Transluzenz, eine mechanische Materialeigenschaft und/oder eine chemische Materialeigenschaft beschreibt.

Der einfacheren Erläuterungen wegen wird im Folgenden angenommen, dass sich drei Materialien M1, M2, M3 hinsichtlich ihrer Farbe unterscheiden.

Dabei sind in der Ausführungsform aus Figur 1 die drei Materialien M1, M2, M3 entlang der Entleerrichtung E des Aufnahmeraums 26 hintereinander angeordnet.

Dabei bilden die drei Materialien M1, M2, M3 jeweils diskrete makroskopische Schichten. Das bedeutet, dass ausgehend vom Bereitstellungsport 28 zunächst eine makroskopische Schicht des ersten Materials M1 angeordnet ist, nachfolgend, in Richtung zur Wand 30, an die makroskopische Schicht aus erstem Material M1 eine makroskopische Schicht aus zweitem Material M2 angrenzt und an diese wiederum in Richtung zur Wand 30 eine makroskopische Schicht aus drittem Material M3 angrenzt.

Mittels der Vorrichtung 10 lässt sich somit die Dentalrestauration 12 schichtweise entsprechend dem zuvor beschriebenen Stereolithographie-Verfahren herstellen. Aufgrund der Anordnung der Materialien M1, M2, M3 im Aufnahmeraum 26, wird dabei zunächst ein erster Abschnitt der Dentalrestauration 12 aus dem ersten Material M1 hergestellt. Dieser umfasst eine oder mehrere Bauteilschichten. Anschließend wird ein zweiter Abschnitt der Dentalrestauration 12 aus dem zweiten Material M2 hergestellt. Auch dieser umfasst eine oder mehrere Bauteilschichten. Danach wird ein dritter Abschnitt der Dentalrestauration 12 aus dem dritten Material M3 hergestellt. Der dritte Abschnitt umfasst ebenfalls eine oder mehrere Bauteilschichten.

Im dargestellten illustrativen Beispiel der Dentalrestauration 12 hat der erste Abschnitt eine hellere Farbe als der zweite Abschnitt. Der zweite Abschnitt wiederum hat eine hellere Farbe als der dritte Abschnitt.

Dies wird deutlich, wenn man den ersten Betriebszustand aus Figur 1 mit dem zweiten Betriebszustand aus Figur 2 vergleicht.

Zudem wird aus der Darstellung gemäß Figur 2 ersichtlich, dass eine Farbgebung der Dentalrestauration 12 dadurch beeinflusst werden kann, wie die Dentalrestauration 12 innerhalb der hergestellten Schichten aus den drei Materialien M1, M2, M3, d.h. innerhalb des Bauraums 18, angeordnet ist.

Optional umfasst ferner der Materialvorratsbehälter 22 einen Ablassport 34. Dieser dient dazu, kontrolliert Material abführen zu können, das nicht zur additiven Herstellung der Dentalrestauration 12 verwendet werden soll. Das Material kann dabei beispielsweise in einer nicht näher dargestellten Ausschussbehälter überführt werden.

Alternativ oder zusätzlich ist ein derartiger Ablassport 34 am Bauraumgehäuse 14 vorgesehen.

Sofern einen Ablassport 34 am Bauraumgehäuse 14 oder am Materialvorratsbehälter 22 vorgesehen ist, kann also bei der additiven Herstellung der Dentalrestauration 12 erstes Material M1, zweites Material M2 oder drittes Material M3 abgelassen werden, sodass nicht die volle, im Aufnahmeraum 26 vorhandene Materialmenge verwendet werden muss. Dies stellt eine weitere Möglichkeit dar, den Aufbau der Dentalrestauration aus den Materialien M1, M2, M3 zu beeinflussen. In diesem Zusammenhang kann insbesondere eine Menge an ersten Material M1, zweitem Material M2 und/oder drittem Material M3, die zur Herstellung der Dentalrestauration 12 verwendet wird, im Wesentlichen frei gewählt werden. Somit lassen sich auch die Eigenschaften der Dentalrestauration 12 gezielt einstellen, z. B. hinsichtlich der Farbe der drei Materialien M1, M2, M3.

Diejenige Variante, in der der Ablassport 34 am Materialvorratsbehälter 22 vorgesehen ist, hat zudem den Vorteil, dass erstes Material M1, zweites Material M2 und/oder drittes Material M3, das abgelassen werden soll, nicht durch den Bauraum 18 hindurchgeleitet werden muss, in dem es sich unter Umständen mit dort befindlichem Material vermischt.

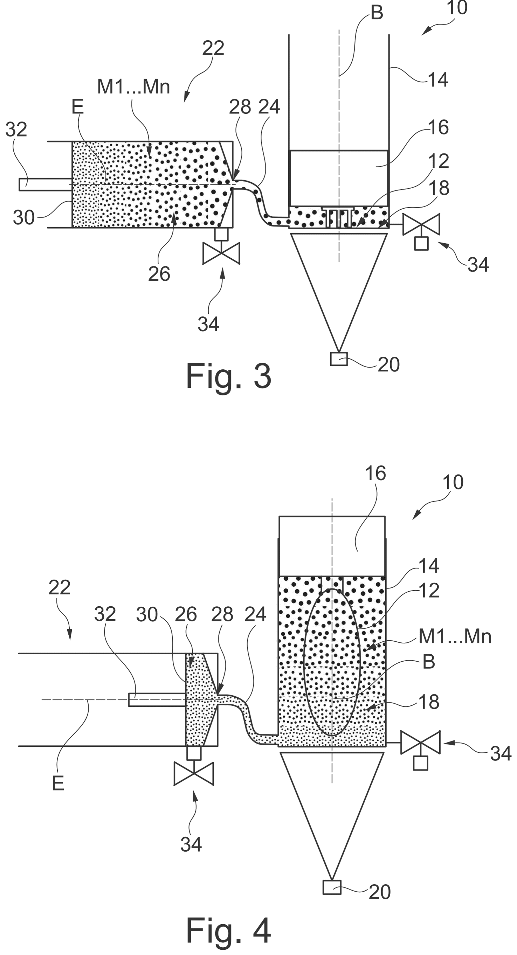

Die Figuren 3 und 4 zeigen ein zweites Beispiel einer Vorrichtung 10 zum additiven Herstellen einer Dentalrestauration 12. Dabei wird im Folgenden lediglich auf die Unterschiede gegenüber dem ersten Beispiel eingegangen.

Diese betreffen die Materialien im Aufnahmeraum 26.

Im Unterschied zum ersten Beispiel sind nämlich im zweiten Beispiel im Aufnahmeraum 26 eine Vielzahl an Materialien, d. h. deutlich mehr als drei, angeordnet, welche sich hinsichtlich wenigstens eines Materialkennwerts unterscheiden.

Dabei ist die Vielzahl an Materialien entlang der Entleerrichtung des Aufnahmeraums 26 derart hintereinander angeordnet, dass sich makroskopisch ein kontinuierlicher Verlauf des wenigstens einen Materialkennwerts ergibt.

Nimmt man wieder an, dass der Materialkennwert eine Farbe betrifft, ergibt sich somit entlang der Entleerrichtung E ein kontinuierlicher Farbverlauf.

Somit lässt sich unter Nutzung des bereits im Prinzip erläuterten Verfahrens, eine Dentalrestauration 12 herstellen, die ebenfalls einen kontinuierlichen Verlauf des Materialkennwerts, zum Beispiel der Farbe, aufweist. Wieder lässt sich der Verlauf des Materialkennwerts durch eine Positionierung der Dentalrestauration 12 innerhalb des Bauraums 18 zusätzlich beeinflussen. Ferner sind auch in der Ausführungsform gemäß Figuren 3 und 4 die optionalen Ablassports 34 vorgesehen.

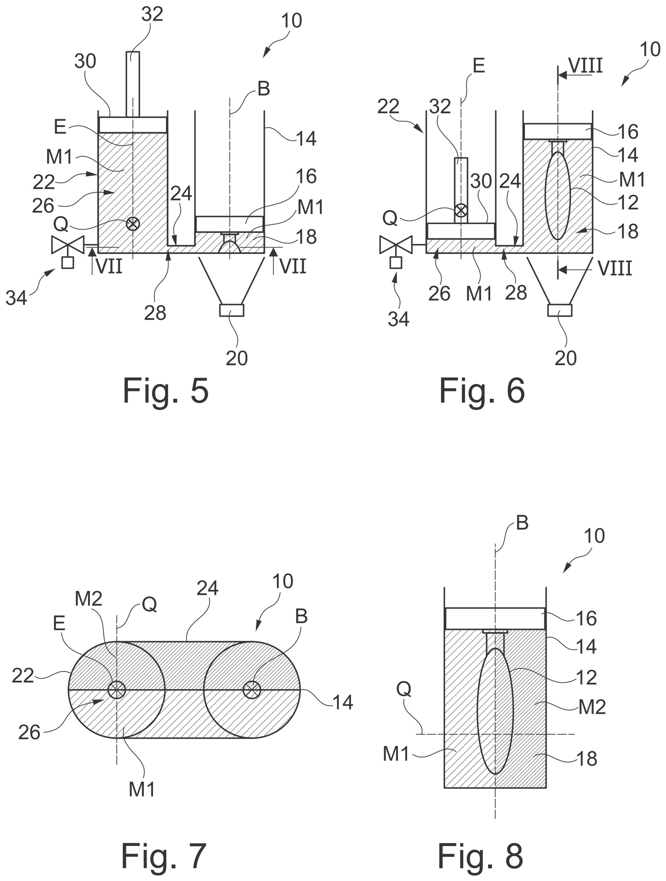

Die Figuren 5 und 6 zeigen ein drittes Beispiel einer Vorrichtung 10 zum additiven Herstellen einer Dentalrestauration 12. Dabei wird im Folgenden lediglich auf die Unterschiede gegenüber dem ersten Beispiel und gegenüber dem zweiten Beispiel eingegangen.

Dieser Unterschied betrifft die Anordnung der Materialien.

Dem dritten Beispiel sind im Aufnahmeraum 26 lediglich zwei Materialien M1, M2 angeordnet.

Im Unterschied zu den vorhergehenden Beispielen sind dabei das erste Material M1 und das zweite Material M2 entlang einer Richtung Q hintereinander angeordnet, die quer zu einer Entleerrichtung verläuft.

Entlang der Entleerrichtung E sind als so das erste Material M1 und das zweite Material M2 nebeneinander angeordnet.

Das bedeutet, dass durch Bewegung der Wand 30 stets auch zwei unterschiedlichen Materialien M1, M2 nebeneinander in den Bauraum 18 gelangen. Dies wird insbesondere deutlich, wenn man die Schnittdarstellung in Figur 7 betrachtet.

Wieder kann man vereinfachend annehmen, dass sich die Materialien M1, M2 hinsichtlich ihrer Farbe unterscheiden.

Somit lässt sich die Dentalrestauration 12 herstellen, wobei nun jedoch nicht entlang der Baurichtung B verschiedene Abschnitte der Dentalrestauration 12 aus verschiedenen Materialien M1, M2 hergestellt sind, sondern sich die verschiedenen Abschnitte der Dentalrestauration aus den verschiedenen Materialien M1, M2 ergeben, die sich beide entlang der Baurichtung B erstrecken (siehe hierzu insbesondere Figur 8).

Wird mittels der Vorrichtung 10 aus den Figuren 5 und 6 ein Verfahren zum additiven Herstellen der Dentalrestauration 12 ausgeführt, wird somit jede der hergestellten Bauteilschichten sowohl aus dem ersten Material M1 als auch aus dem zweiten Material M2 erstellt. Ein erster Abschnitt jeder Schicht wird also aus dem ersten Material M1 hergestellt und ein zweiter Abschnitt jeder Schicht aus dem zweiten Material M2.

Auch wenn das dritte Beispiel anhand von diskreten makroskopischen Schichten des ersten Materials M1 und des zweiten Materials M2 erläutert wurde, versteht es sich, dass es ebenfalls möglich ist, im dritten Beispiel eine Vielzahl an Materialien zu verwenden, die quer zur Entleerrichtung E des Aufnahmeraums 26 derart hintereinander angeordnet sind, dass sich makroskopisch ein kontinuierlicher Verlauf des wenigstens einen Materialkennwerts ergibt. Mit anderen Worten lässt sich der kontinuierliche Verlauf des Materialkennwerts, wie er im zweiten Beispiel erläutert wurde, auch mit der Hintereinanderanordnung der Materialien in eine Richtung Q quer zur Entleerrichtung E kombinieren.

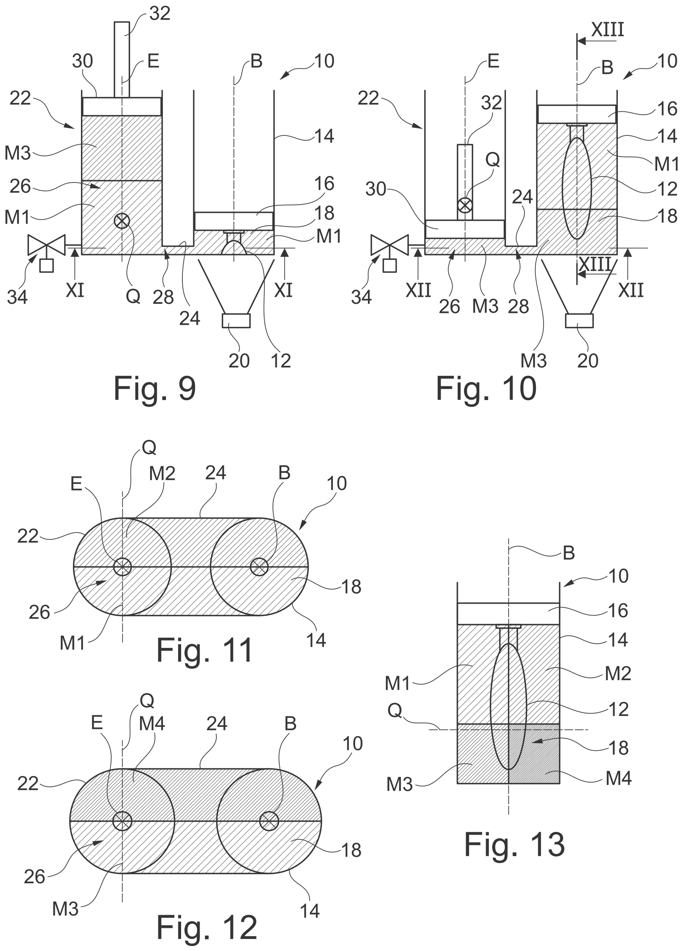

Die Figuren 9 und 10 zeigen ein viertes Beispiel einer Vorrichtung 10 zum additiven Herstellen einer Dentalrestauration 12. Dabei wird im Folgenden lediglich auf die Unterschiede gegenüber den vorhergehenden Beispielen eingegangen.

Diese Unterschiede betreffen die Anordnung der Materialien.

Im vierten Beispiel sind im Materialvorratsbehälter 20 insgesamt vier Materialien M1, M2, M3, M4 angeordnet, die sich hinsichtlich wenigstens eines Materialkennwerts unterscheiden.

Dabei sind die Materialien sowohl entlang der Entleerrichtung E hintereinander angeordnet als auch entlang einer quer zur Entleerrichtung E verlaufenden Richtung.

Genauer gesagt sind in einem ersten, entlang der Entleerrichtung E benachbart zum Bereitstellungsport 28 angeordneten Abschnitt das erste Material M1 und das zweite Material M2 angeordnet, wobei das erste Material M1 und das zweite Material M2 innerhalb dieses Abschnitts entlang einer Richtung Q, die quer zur Entleerrichtung E verläuft, hintereinander angeordnet sind.

In Richtung zur Wand 30 hin schließt sich an diesen ersten Abschnitt ein zweiter Abschnitt an, der somit entlang der Entleerrichtung E zwischen dem ersten Abschnitt und der Wand 30 liegt. Innerhalb des zweiten Abschnitts sind ein drittes Material M3 und ein viertes Material M4 angeordnet, wobei das dritte Material M3 und das vierte Material M4 innerhalb des zweiten Abschnitts entlang einer Richtung Q, die quer zur Entleerrichtung E verläuft, hintereinander angeordnet sind.

Der Materialvorratsbehälter 22 gemäß dem vierten Beispiel kann somit als Kombination der Materialvorratsbehälter 22 aus dem ersten Beispiel und aus dem dritten Beispiel angesehen werden.

Wird mittels der Vorrichtung 10 aus den Figuren 9 und 10 die Dentalrestauration 12 hergestellt, so wird zunächst ein erster Abschnitt der Dentalrestauration 12 sowohl aus dem ersten Material M1 als auch aus dem zweiten Material M2 hergestellt. Anschließend wird ein zweiter Abschnitt der Dentalrestauration 12 sowohl aus dem dritten Material M3 als auch aus dem vierten Material M4 hergestellt. Dabei sind der erste Abschnitt der Dentalrestauration 12 und der zweite Abschnitt der Dentalrestauration 12 entlang der Baurichtung B benachbart.

Wie gehabt kann dabei zusätzlich zur Auswahl der Materialien M1, M2, M3, M4 die Dentalrestauration 12 auch dadurch beeinflusst werden, wie sie innerhalb des Bauraums 18 angeordnet wird (siehe Figur 13).

Auch wenn das vierte Beispiel anhand von diskreten makroskopischen Schichten des ersten Materials M1, des zweiten Materials M2, des dritten Materials M3 und des vierten Materials M4 erläutert wurde, versteht es sich, dass es ebenfalls möglich ist, im vierten Beispiel eine Vielzahl an Materialien zu verwenden, die derart hintereinander angeordnet sind, dass sich makroskopisch ein kontinuierlicher Verlauf des wenigstens einen Materialkennwerts ergibt. Das kann für die entlang der Entleerrichtung E hintereinander angeordneten Materialien und/oder für die quer zur Entleerrichtung hintereinander angeordnete Materialien gelten. Mit anderen Worten lässt sich der kontinuierliche Verlauf des Materialkennwerts, wie er im zweiten Beispiel erläutert wurde, auch mit dem vierten Beispiel kombinieren.

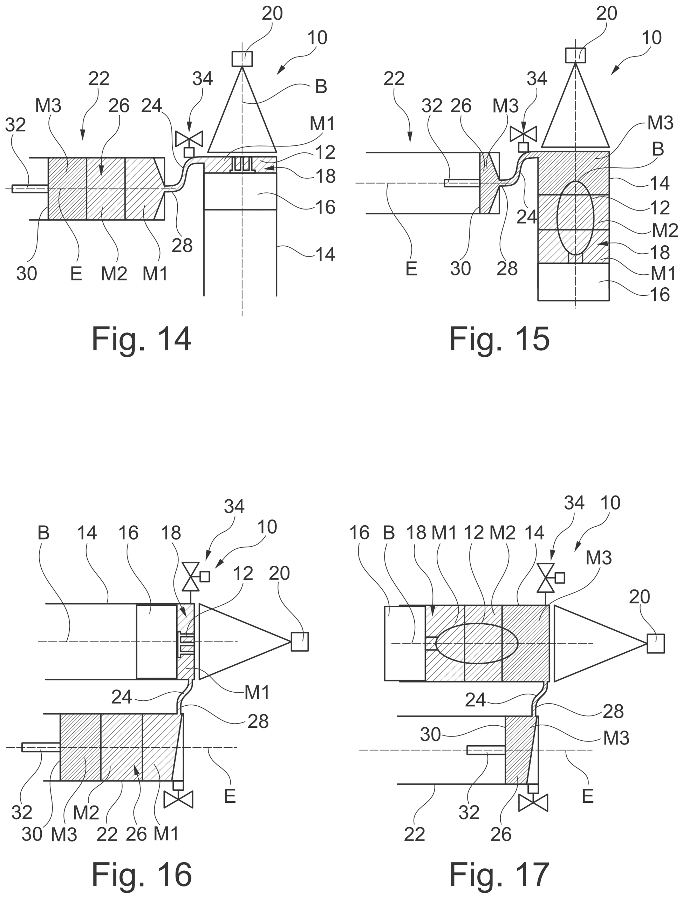

Die Figuren 14 und 15 zeigen ein fünftes Beispiel einer Vorrichtung 10 zum additiven Herstellen einer Dentalrestauration 12. Dabei wird im Folgenden lediglich auf die Unterschiede gegenüber den vorhergehenden Beispielen eingegangen.

Das fünfte Beispiel ist eine Variante des ersten Beispiels, wobei lediglich die Aufbaurichtung der Dentalrestauration 12 geändert wurde. Während im ersten Beispiel die Dentalrestauration 12 von unten nach oben, d. h. bottom-up, gebaut wird, wird diese dem fünften Beispiel von oben nach unten, d. h. top-down gebaut.

Die Figuren 16 und 17 zeigen ein sechstes Beispiel einer Vorrichtung 10 zum additiven Herstellen einer Dentalrestauration 12. Dabei wird im Folgenden lediglich auf die Unterschiede gegenüber den vorhergehenden Beispielen eingegangen.

Auch das sechste Beispiel ist eine Variante des ersten Beispiels, wobei lediglich die Aufbaurichtung der Dentalrestauration geändert wurde. Während im ersten Beispiel die Dentalrestauration 12 von unten nach oben, d. h. bottom-up, gebaut wird, wird diese im sechsten Beispiel von einer Seite zur anderen Seite gebaut.

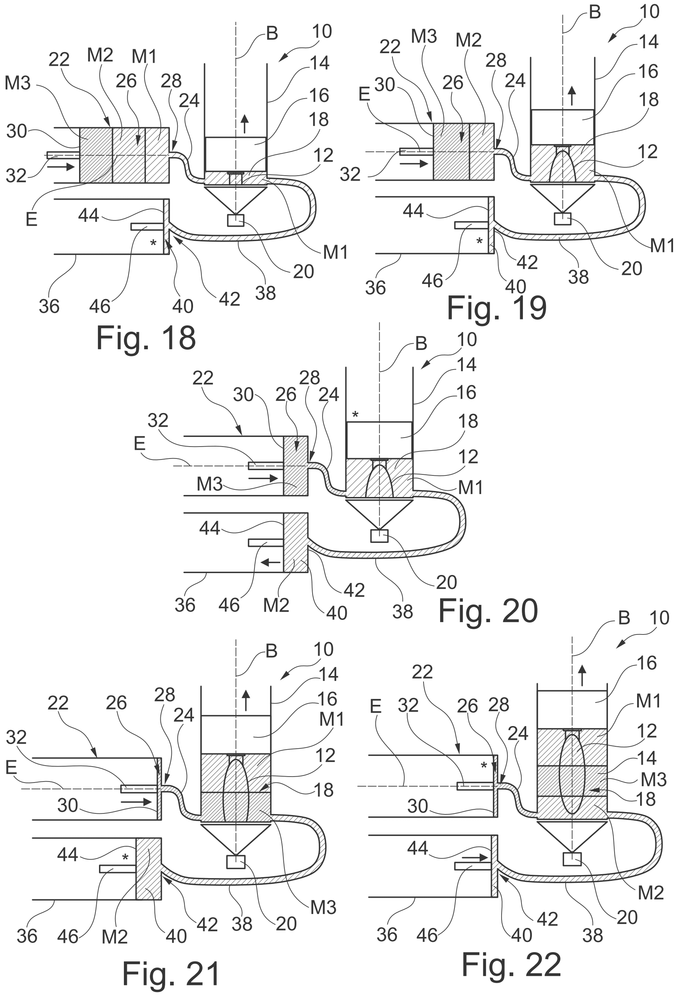

Die Figuren 18 bis 22 zeigen ein siebtes Beispiel einer Vorrichtung 10 zum additiven Herstellen einer Dentalrestauration 12. Dabei wird im Folgenden lediglich auf die Unterschiede gegenüber den vorhergehenden Beispielen eingegangen.

### Auch das siebte Beispiel kann als Variante des ersten Beispiels angesehen werden

Dabei weist die Vorrichtung 10 zusätzlich einen Aufnahmebehälter 36 auf.

Dieser ist über eine zusätzliche Leitung 38 materialleitend mit dem Bauraum 18 verbunden.

Wie der Materialvorratsbehälter 22 weist auch der Aufnahmebehälter 36 einen Aufnahmeraum 40 auf, der auf einer Seite mit einem Bereitstellungsport 42 materialleitend verbunden ist und auf einer anderen Seite durch eine bewegliche Wand 44 begrenzt ist. Auch die Wand 44 ist mit einem lediglich schematisch dargestellten Antrieb 46 gekoppelt, sodass sich diese wahlweise verschieben lässt.

Es lassen sich nun durch entsprechende Betätigung der Wand 30, der Wand 44 und der Bauplattform 16 folgende Elemente oder Teilschritte eines Verfahrens zum additiven Herstellen einer Dentalrestauration 12 realisieren.

Es kann Material aus dem Materialvorratsbehälter 22 in den Bauraum 18 eingebracht werden. Hierfür muss die Wand 30 in Richtung zum Bereitstellungsport 28 des Materialvorratsbehälters 22 bewegt werden. Die Bauplattform 16 muss in entsprechender Weise angehoben werden, d. h. von der Belichtungseinheit 20 wegbewegt werden. Gleichzeitig wird die Wand 44 stillgehalten, d. h. die Wand 44 steht fest.

In ähnlicher Weise ist es möglich, Material aus dem Aufnahmebehälter 36, sofern vorhanden, in den Bauraum 18 einzubringen. Hierfür muss die Wand 44 in Richtung zum Bereitstellungsport 42 des Aufnahmebehälters 36 bewegt werden. Die Bauplattform 16 muss in entsprechender Weise angehoben werden, d. h. von der Belichtungseinheit 20 wegbewegt werden. Gleichzeitig wird die Wand 30 stillgehalten, d. h. die Wand 30 steht fest.

Darüber hinaus kann Material aus dem Bauraum 18 oder aus dem Materialvorratsbehälter 22 in den Aufnahmebehälter 36 überführt werden. Hierfür wird die Wand 30 des Materialvorratsbehälters 22 in Richtung zum Bereitstellungsport 28 bewegt. Die Wand 44 des Aufnahmebehälters 36 bewegt sich in entsprechender Weise vom Bereitstellungsport 42 des Aufnahmebehälters 36 weg. Die Bauplattform 16 bewegt sich dabei nicht.

Umgekehrt ist es auch möglich, Material aus dem Aufnahmebehälter 36, sofern vorhanden, oder aus dem Bauraum 18 in den Materialvorratsbehälter 22 zu überführen. Hierfür wird die Wand 44 des Aufnahmebehälters 36 in Richtung zum Bereitstellungsport 42 des Aufnahmebehälters 36 bewegt. Die Wand 30 des Materialvorratsbehälters 22 wird in eine Richtung vom Bereitstellungsport 28 weg bewegt. Die Bauplattform 16 bewegt sich wieder nicht.

Diese Elemente oder Teilschritte eines Verfahrens zum additiven Herstellen der Dentalrestauration 12 können in beliebiger Weise kombiniert werden. Dabei sind Bewegungen der Wände 30, 44 sowie der Bauplattform 16 in den Figuren 18 bis 22 durch Pfeile symbolisiert. Ein Blockieren einer der Wände 30, 44 oder der Bauplattform 16 ist durch einen Stern symbolisiert. Nachfolgend wird ein illustratives Beispiel anhand der Figur 18 bis 22 erläutert.

Dabei wird zunächst ein erster Abschnitt der Dentalrestauration 12 aus dem ersten Material M1 aufgebaut. Dieser erste Abschnitt umfasst mehrere Bauteilschichten. Hierfür wird die Wand 30 des Materialvorratsbehälters 22 sukzessive in Richtung zum Bereitstellungsport 28 bewegt. Die Bauplattform 16 wird in entsprechender Weise dazu sukzessive von der Belichtungseinheit 20 wegbewegt. Während der Herstellung des ersten Abschnitts der Dentalrestauration 12 bewegt sich die Wand 44 des Aufnahmebehälters 36 nicht. Nachdem in der Ausführungsform gemäß Figur 18 kein Material im Aufnahmebehälter 36 vorhanden ist, kann auch davon gesprochen werden, dass der Aufnahmebehälters 36 geschlossen bleibt (siehe insbesondere Figuren 18 und 19).

In der dargestellten Ausführungsform wird das erste Material M1 vollständig zum Aufbau des ersten Abschnitts der Dentalrestauration 12 verwendet.

Allerdings soll ein anschließender zweiter Abschnitt der Dentalrestauration 12 nicht aus dem zweiten Material M2 hergestellt werden, sondern aus dem dritten Material M3.

Aus diesem Grund wird nach Fertigstellung des ersten Abschnitts der Dentalrestauration 12 die Bauplattform 16 unbeweglich gehalten. Es wird dann durch Betätigung der Wand 30 des Materialvorratsbehälters 22 das zweite Material M2 durch den Bauraum 18, d. h. durch den unteren Abschnitt des Bauraum 18, hindurch in den Aufnahmebehälter 36 überführt. Hierfür wird in entsprechender Weise die Wand 44 des Aufnahmebehälters 36 vom Bereitstellungsport 42 des Aufnahmebehälters 36 wegbewegt (siehe insbesondere Figuren 19 und 20).

Dies erfolgt so lange bis im Wesentlichen alles zweite Material M2 im Aufnahmeraum 40 des Aufnahmebehälters 36 ist.

Danach wird der zweite Abschnitt der Dentalrestauration 12 unter Nutzung des dritten Materials M3 hergestellt. Hierfür wird wieder die Wand 30 in Richtung zum Bereitstellungsport 28 des Materialvorratsbehälters 22 bewegt und die Bauplattform 16 in entsprechender Weise von der Belichtungseinheit 20 wegbewegt. Die Wand 44 wird dabei nicht bewegt (siehe insbesondere Figuren 20 und 21).

Ein anschließender dritter Abschnitt der Dentalrestauration 12 soll nun aus zweitem Material M2 hergestellt werden. Nachdem das zweite Material M2 zuvor in den Aufnahmebehälter 36 überführt wurde, muss hier für die Wand 44 des Aufnahmebehälters 36 in Richtung zum Bereitstellungsport 42 des Aufnahmebehälters 36 bewegt werden. Die Bauplattform 16 muss in entsprechender Weise angehoben werden, d. h. von der Belichtungseinheit 20 weg bewegt werden. Während der Herstellung des dritten Abschnitts wird die Wand 30 des Materialvorratsbehälters 22 nicht bewegt (siehe insbesondere Figuren 21 und 22).

Insgesamt lässt sich also durch die Verwendung des Aufnahmebehälters 36 eine Reihenfolge, in der Materialien M1, M2 und M3 im Materialvorratsbehälter 22 angeordnet sind, von einer Reihenfolge entkoppeln, in der die Materialien M1, M2, M3 zum Aufbauen der Dentalrestauration 12 verwendet werden.

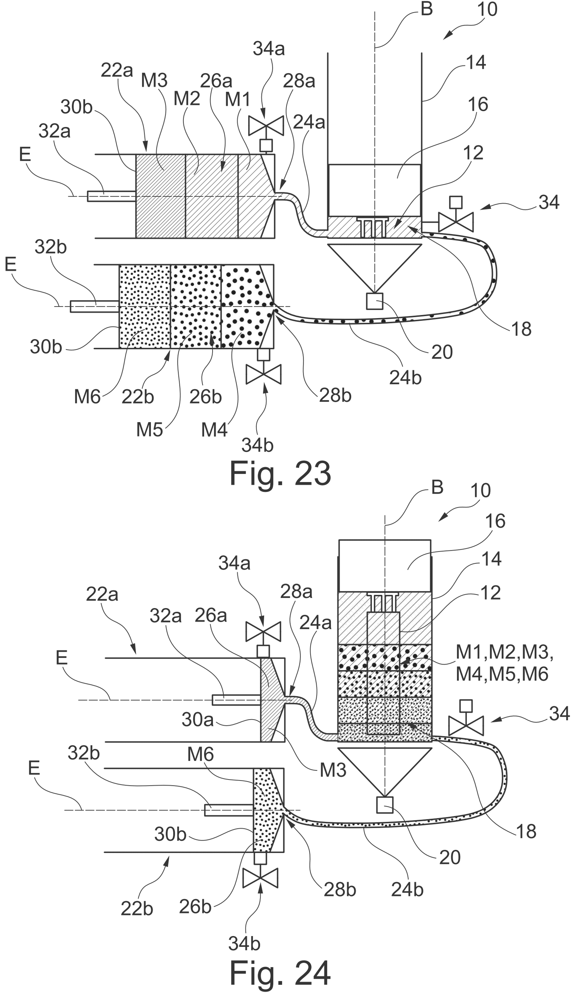

Die Figuren 23 und 24 zeigen ein achtes Beispiel einer Vorrichtung 10 zum additiven Herstellen einer Dentalrestauration 12. Dabei wird im Folgenden lediglich auf die Unterschiede gegenüber den vorhergehenden Beispielen eingegangen.

Dabei unterscheidet sich das achte Beispiel insbesondere von den vorhergehenden Beispielen dadurch, dass insgesamt zwei Materialvorratsbehälter 22 als Bestandteile der Vorrichtung 10 vorgesehen sind. Zur besseren Unterscheidbarkeit werden die Materialvorratsbehälter 22 im Folgenden mit den Suffixen a und b bezeichnet. Dasselbe gilt für Komponenten der Materialvorratsbehälter 22 sowie mit diesen Verbundene Bauteile oder Baugruppen.

Beide Materialvorratsbehälter 22a, 22b sind dabei über eine jeweilige Leitung 24a, 24b mit dem Bauraum 18 materialleitend verbunden.

Dabei sind im ersten Materialvorratsbehälter 22a insgesamt drei Materialien M1, M2, M3 entlang der Entleerrichtung E in makroskopischen Schichten angeordnet.

Im dargestellten Ausführungsbeispiel unterscheiden sich die Materialien M1, M2, M3 z. B. hinsichtlich ihrer Farbe.

Im zweiten Materialvorratsbehälter 22b sind auch insgesamt drei Materialien angeordnet, die als viertes Material M4, fünftes Material M5 und sechstes Material M6 bezeichnet werden. Diese Materialien M4, M5, M6 sind ebenfalls entlang der Entleerrichtung E in makroskopischen Schichten angeordnet.

Im dargestellten Ausführungsbeispiel unterscheiden sich die Materialien M4, M5, M6 z. B. hinsichtlich ihrer Transluzenz.

Es lässt sich somit mit der Vorrichtung 10 eine Dentalrestauration 12 herstellen, die einerseits Abschnitte mit verschiedener Farbe aufweist. Dies wird durch die Verwendung der Materialien M1, M2, M3 mit unterschiedlichen Farben realisiert.

Gleichzeitig kann die Dentalrestauration 12 Abschnitte mit verschiedener Transluzenz aufweisen. Dies wird durch die Verwendung der Materialien M4, M5, M6 mit unterschiedlicher Transluzenz erreicht.

Mit anderen Worten kann also beim additiven Herstellen der Dentalrestauration 12 im Bauraum 18 zum Erstellen einer Bauteilschicht ein Material aus dem Materialvorratsbehälter 22a und ein Material aus dem Materialvorratsbehälter 22b gemischt werden. Das ist jedoch optional. Gleichfalls ist es möglich, lediglich ein Material aus dem Materialvorratsbehälter 22a oder ein Material aus dem Materialvorratsbehälter 22b zum Aufbau einer Bauteilschicht zu verwenden.

Für den Fall, dass sowohl ein Material aus dem Materialvorratsbehälter 22a als auch ein Material aus dem Materialvorratsbehälter 22b verwendet werden, lässt sich über die Bewegung der Wände 30a, 30b ein Mischungsverhältnis in gewünschter Weise einstellen.

Ebenso ist jeder der Materialvorratsbehälter 22a, 22b mit einem optionalen Ablassport 34a, 34b ausgestattet, sodass sich Materialien aus beiden Materialvorratsbehälter 22a, 22b bei Bedarf in einen Ausschussbehälter überführen lassen können.

Insgesamt lässt sich somit eine Dentalrestauration 12 herstellen, die nicht nur einen Farbverlauf, sondern auch eine Transluzenzverlauf aufweist.

Es versteht sich, dass sich die Vorrichtung 10 aus den Figuren 23 und 24, die vorliegend anhand makroskopisch diskreter Materialschichten erläutert wurde, selbstverständlich auch derart variieren lässt, dass in einem oder beiden Materialvorratsbehältern 22a, 22b eine Vielzahl an Materialien derart angeordnet sind, dass sich makroskopisch ein kontinuierlicher Verlauf des jeweiligen Materialkennwerts, zum Beispiel der Farbe und/oder der Transluzenz, ergibt.

Ebenso versteht es sich, dass sich die Ausführungsform aus den Figuren 23 und 24 auch mit der Ausführungsform aus den Figuren 18 bis 22 kombinieren lässt, sodass die Reihenfolge der Materialien in den Materialvorratsbehältern 22a und/oder 22b von der Reihenfolge der Materialien in der Dentalrestauration 12 entkoppelt werden kann.

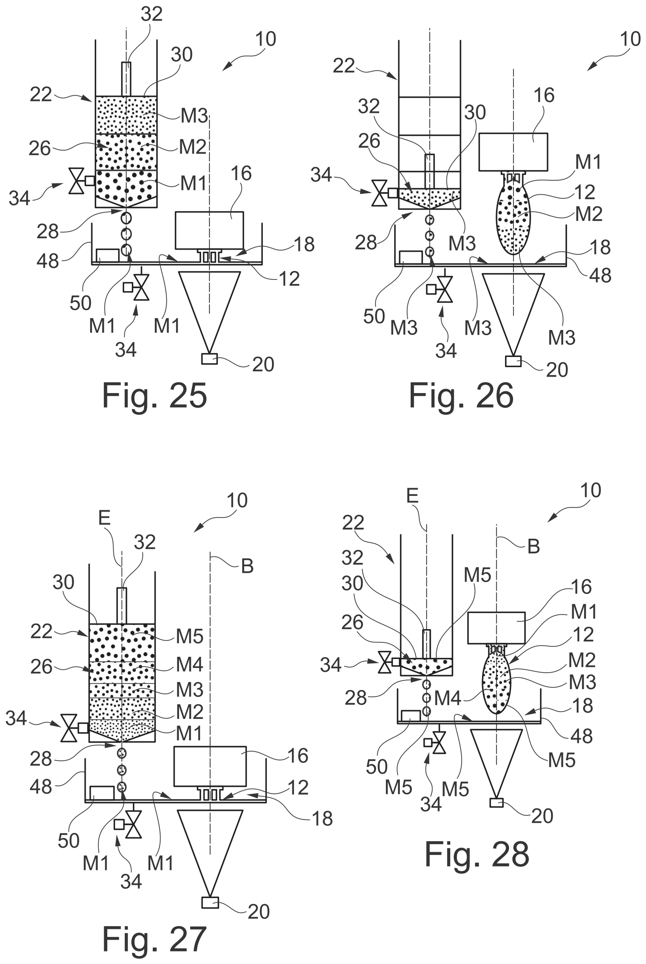

Die Figuren 25 und 26 zeigen ein neuntes Beispiel einer Vorrichtung 10 zum additiven Herstellen einer Dentalrestauration 12. Dabei wird im Folgenden lediglich auf die Unterschiede gegenüber den vorhergehenden Beispielen eingegangen.

Dabei lässt sich das neunte Beispiel insbesondere im Vergleich zum ersten Beispiel gut erläutern.

Die Vorrichtung 10 gemäß dem neunten Beispiel unterscheidet sich von der Vorrichtung 10 gemäß dem ersten Beispiel dadurch, dass die Vorrichtung 10 gemäß dem neunten Beispiel als sogenanntes offenes System ausgeführt ist, wobei die Vorrichtung 10 gemäß dem ersten Beispiel als sogenanntes geschlossenes System ausgeführt ist.

Das bedeutet, dass die Vorrichtung 10 gemäß dem neunten Beispiel eine nach oben offene Wanne 48 aufweist, in die mittels des Bereitstellungsport 28 des Materialvorratsbehälters 22 Material zum additiven Herstellen der Dentalrestauration 12 eingebracht wird.

Dabei kann ein Füllstand der Wanne 48 grundsätzlich variieren, solange ein gewisser, zum Ausführen des additiven Herstellungsverfahrens nötiger, Mindestfüllstand eingehalten wird.

Um Material im Inneren der Wanne 48 homogen zu halten oder zu homogenisieren, falls nötig, ist am Boden der Wanne 48 zudem eine Mischvorrichtung 50, die auch als Mixer bezeichnet werden kann, angeordnet.

In ähnlicher Weise wie beim ersten Beispiel ist der Boden der Wanne 48 zumindest abschnittsweise transparent ausgeführt, sodass mittels einer Belichtungseinheit 20, die unterhalb des Bodens der Wanne 48 angeordnet ist, Material im Inneren der Wanne 48 ortsselektiv durch Belichtung ausgehärtet werden kann.

Aufgrund der Tatsache, dass in der Wanne 48 der Füllstand variieren kann, unterscheidet sich ferner die Vorrichtung 10 gemäß dem neunten Beispiel vom ersten Beispiel dadurch, dass trotz einer Bereitstellung des ersten Materials M1, des zweiten Materials M2 und des dritten Materials M3 im Materialvorratsbehälter 22 in Form von makroskopisch diskreten Schichten, im der herzustellenden Dentalrestauration 12 trotzdem eine sanfte, d. h. kontinuierliche, Änderung des Materialkennwerts umgesetzt werden kann.

Das liegt daran, dass es möglich ist, in der Wanne 48 verschiedene Materialien, die im Materialvorratsbehälter 22 hintereinander angeordnet sind, zu mischen.

In einem rein illustrativen Beispiel wird als so während des Verfahrens zum additiven Herstellen der Dentalrestauration 12 ausgehend von einer Situation, in der in der Wanne 48 lediglich erstes Material M1 vorhanden ist, irgendwann der letzte Rest an erstem Material M1 vom Materialvorratsbehälter 22 in die Wanne 48 gegeben. Wird anschließend der Materialvorratsbehälter 22 weiter entleert, wird also zweites Material M2 in die Wanne 48 gegeben. Im weiteren Verlauf des Herstellungsverfahrens entsteht also in der Wanne 48 eine Mischung aus erstem Material M1 und zweitem Material M2, wobei ein Anteil des zweiten Materials M2 zunimmt. Dasselbe gilt am Übergang vom zweiten Material M2 zum dritten Material M3.

Es versteht sich, dass auch im neunten Beispiel optional ein Ablassport 34 am Materialvorratsbehälter 22 vorgesehen sein kann. Alternativ oder zusätzlich kann ein Ablassport 34 an der Wanne 48 vorgesehen sein. Es ergeben sich die bereits erläuterten Vorteile.

Die Figuren 27 und 28 zeigen ein zehntes Beispiel einer Vorrichtung 10 zum additiven Herstellen einer Dentalrestauration 12. Dabei wird im Folgenden lediglich auf die Unterschiede gegenüber den vorhergehenden Beispielen eingegangen.

Dabei kann das zehnte Beispiel als Variante des neunten Beispiels angesehen werden, wobei sich der Materialvorratsbehälter 22 des zehnten Beispiels lediglich dadurch vom Materialvorratsbehälter aus dem neunten Beispiel unterscheidet, dass in diesem insgesamt fünf Materialien M1, M2, M3, M4, M5 angeordnet sind.

Das Beispiel aus den Figuren 27 und 28 ist zusätzlich zu einer Herstellung einer Dentalrestauration 12 auch besonders gut dafür geeignet, Schmuckstücke oder Sensoren herzustellen.

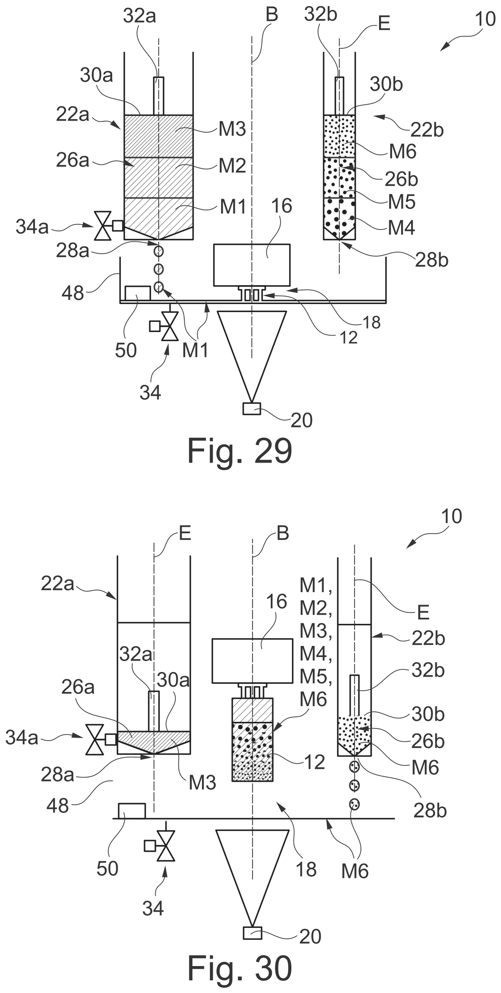

Die Figuren 29 und 30 zeigen ein elftes Beispiel einer Vorrichtung 10 zum additiven Herstellen einer Dentalrestauration 12. Dabei wird im Folgenden lediglich auf die Unterschiede gegenüber den vorhergehenden Beispielen eingegangen.

Dabei lässt sich das elfte Beispiel besonders gut ausgehend vom achten Beispiel erläutern, wobei das achte Beispiel ein sogenanntes geschlossenes System betrifft und das elfte Beispiel ein sogenanntes offenes System.

Dabei sind insgesamt wieder zwei Materialvorratsbehälter 22 als Bestandteile der Vorrichtung 10 vorgesehen. Zur besseren Unterscheidbarkeit werden die Materialvorratsbehälter 22 im Folgenden wieder mit den Suffixen a und b bezeichnet. Dasselbe gilt wieder für Komponenten der Materialvorratsbehälter sowie für mit diesen verbundene Baugruppen und Bauteile.

Beide Materialvorratsbehälter 22a, 22b sind dabei mit dem Bauraum 18 materialleitend verbunden. Das bedeutet, dass mittels beider Materialvorratsbehälter 22a, 22b Material in die Wanne 48 gegeben werden kann.

Dabei sind im ersten Materialvorratsbehälter 22a insgesamt drei Materialien M1, M2, M3 entlang der Entleerrichtung E in makroskopischen Schichten angeordnet.

Im dargestellten Ausführungsbeispiel unterscheiden sich die Materialien M1, M2, M3 z. B. hinsichtlich ihrer Farbe.

Im zweiten Materialvorratsbehälter 22b sind auch insgesamt drei Materialien angeordnet, die als viertes Material M4, fünftes Material M5 und sechstes Material M6 bezeichnet werden. Diese Materialien sind ebenfalls entlang der Entleerrichtung E in makroskopischen Schichten angeordnet.

Im dargestellten Ausführungsbeispiel unterscheiden sich die Materialien M4, M5, M6 z. B. hinsichtlich ihrer Transluzenz.

Es lässt sich somit mit der Vorrichtung 10 eine Dentalrestauration 12 herstellen, die einerseits Abschnitte mit verschiedener Farbe aufweist. Dies wird durch die Verwendung der Materialien M1, M2, M3 mit unterschiedlichen Farben realisiert.

Gleichzeitig kann die Dentalrestauration 12 Abschnitte mit verschiedener Transluzenz aufweisen. Dies wird durch die Verwendung der Materialien M4, M5, M6 mit unterschiedlicher Transluzenz erreicht.

Mit anderen Worten kann also beim additiven Herstellen der Dentalrestauration 12 im Bauraum 18 zum Erstellen einer Bauteilschicht ein Material aus dem Materialvorratsbehälter 22a und ein Material aus dem Materialvorratsbehälter 22b gemischt werden. Das ist jedoch optional. Gleichfalls ist es möglich, lediglich ein Material aus dem Materialvorratsbehälter 22a oder ein Material aus dem Materialvorratsbehälter 22b zum Aufbau einer Bauteilschicht zu verwenden.

Für den Fall, dass sowohl ein Material aus dem Materialvorratsbehälter 22a als auch ein Material aus dem Materialvorratsbehälter 22b verwendet werden, lässt sich über die Bewegung der Wände 30a, 30b ein Mischungsverhältnis in gewünschter Weise einstellen.

Ebenso ist jeder der Materialvorratsbehälter 22a, 22b mit einem optionalen Ablassport 34a, 34b ausgestattet, sodass sich Materialien aus beiden Materialvorratsbehältern 22a, 22b bei Bedarf in einen Ausschussbehälter überführen lassen können.

Insgesamt lässt sich somit eine Dentalrestauration 12 herstellen, die nicht nur einen Farbverlauf, sondern auch eine Transluzenzverlauf aufweist.

Wie bereits zum neunten Beispiel erläutert, kann auch im elften Beispiel aufgrund der Tatsache, dass in der Wanne 48 der Füllstand variieren kann, trotz einer Bereitstellung der Materialien M1, M2, M3 sowie M4, M4 und M6 in Form von makroskopisch diskreten Schichten, im der herzustellenden Dentalrestauration 12 eine sanfte, d. h. kontinuierliche, Änderung des Materialkennwerts umgesetzt werden.

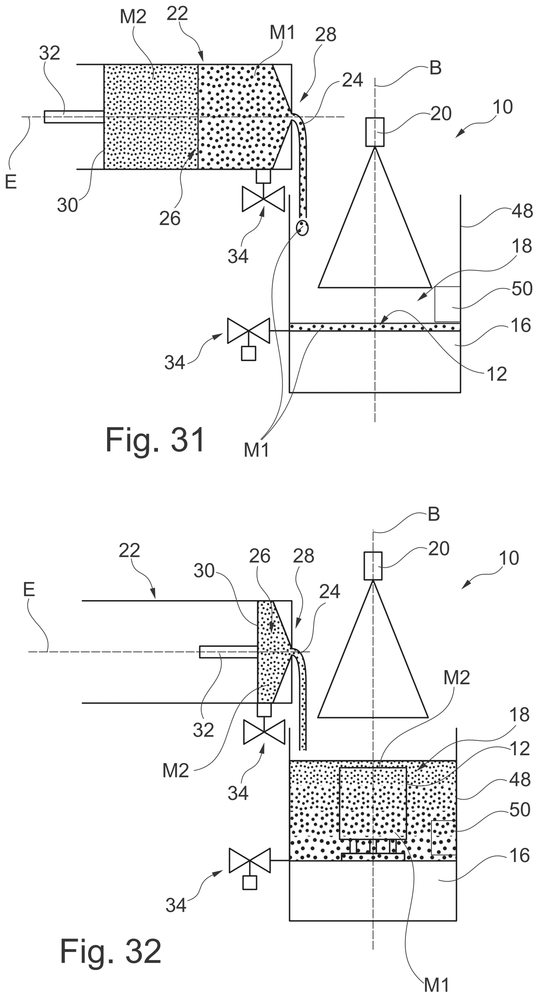

Die Figuren 31 und 32 zeigen ein zwölftes Beispiel einer Vorrichtung 10 zum additiven Herstellen einer Dentalrestauration 12. Dabei wird im Folgenden lediglich auf die Unterschiede gegenüber den vorhergehenden Beispielen eingegangen.

Das zwölfte Beispiel ist eine Variante des neunten Beispiels, wobei die Aufbaurichtung der Dentalrestauration geändert wurde. Während im neunten Beispiel die Dentalrestauration 12 von unten nach oben, d. h. bottom-up, gebaut wird, wird diese dem zwölften Beispiel von oben nach unten, d. h. top-down gebaut.

Darüber hinaus ist im zwölften Beispiel die Orientierung des Materialvorratsbehälters 22 horizontal anstatt vertikal.

Wie bereits in zahlreichen der vorhergehenden Beispiele erläutert, können im Materialvorratsbehälter 22 unterschiedliche Materialien, d. h. wenigstens ein erstes Material M1 und ein zweites Material M2, in diskreten makroskopischen Schichten vorgesehen sein, wobei das erste Material M1 und das zweite Material M2 entlang einer Entleerrichtung E hintereinander angeordnet sind.

Um die Materialien, die im Materialvorratsbehälter 22 entlang der Entleerrichtung E hintereinander angeordnet sind, zuverlässig voneinander zu trennen, können dabei Trennelemente 52 vorgesehen sein, die zwischen jeweils benachbarten Materialien, d. h. zwischen einem ersten Material M1 und einem zweiten Material M2 oder zwischen einem zweiten Material M2 und einen dritten Material M3 usw., angeordnet sind, um die jeweils benachbarte Materialien voneinander zu separieren.

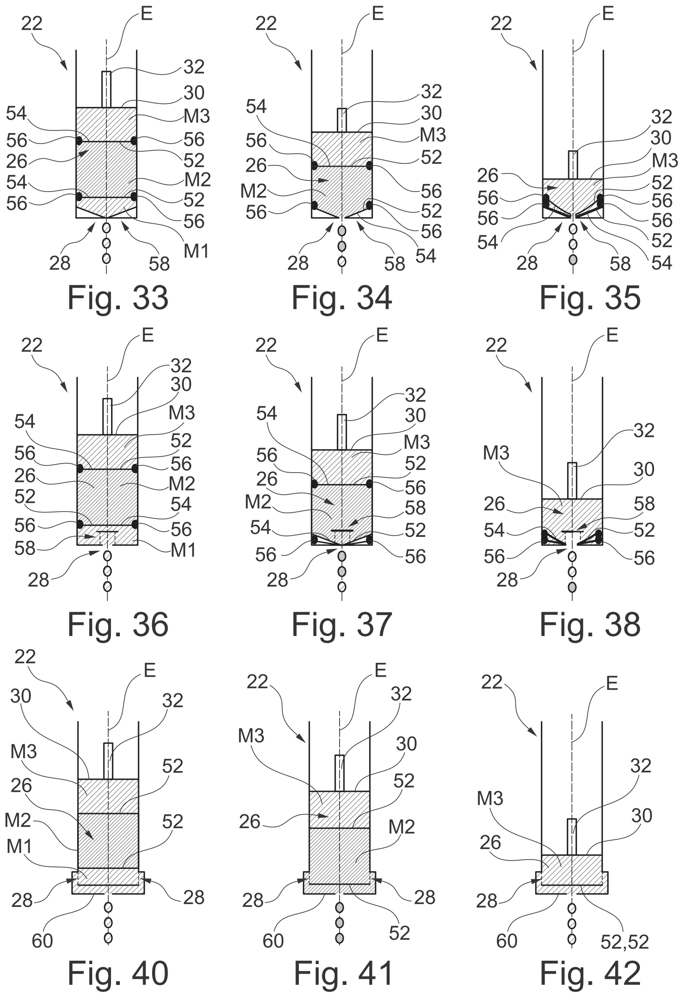

In den Figuren 33 bis 35 ist eine erste Variante eines derartigen Trennelements 52 im Zusammenhang mit einem illustrativen Materialvorratsbehälter 22 in verschiedenen Betriebszuständen des Materialvorratsbehälters 22 gezeigt.

In dieser Variante umfasst das Trennelement eine Folie 54, die alternativ auch als Membran ausgeführt werden kann.

Diese Folie 54 erstreckt sich im Wesentlichen über die die gesamte Grenzschicht zwischen den voneinander zu separierenden Materialien. Dabei weist das Trennelement 52 aus den Figuren 33 bis 35 zudem ein Führungselement 56 auf, das in dieser Ausführungsform als verdickter Randabschnitt der Folie 54 ausgeführt ist. Das Führungselement 56 dient dazu, das Trennelement 52 im Aufnahmeraum 26 derart zu führen, dass es sich lediglich entlang der Entleerrichtung E bewegen kann.

In der Ausführungsform gemäß Figuren 33 bis 35 ist der Materialvorratsbehälter 22 zudem mit einem Perforationselement 58 ausgestattet.

Das Perforationselement 58 dient dazu, das Trennelement 52 aufzubrechen, wenn mittels des Bereitstellungsports 28 das entlang der Entleerrichtung E hinter dem Trennelement 52 liegende Material zur additiven Herstellung der Dentalrestauration 12 bereitgestellt werden soll.

In der Variante aus den Figuren 30 bis 35 ist das Perforationselement 58 einerseits durch einen trichterförmig zulaufenden Endabschnitt des Aufnahmeraums 26 und andererseits durch eine Öffnung gebildet, die zum Bereitstellungsport 28 führt.

Ist das entlang der Entleerrichtung E vor dem Trennelement 52 liegende Material vollständig aus dem Aufnahmeraum 26 des Materialvorratsbehälters 22 entnommen, wird also durch weitere Betätigung der Wand 30 die Folie 54 an den trichterförmig zulaufenden Endabschnitt des Aufnahmeraums 26 angelegt und dadurch gespannt. Auf diese Weise wird die Folie 54 in einem gespannten Zustand auf die Öffnung gelegt, die zum Bereitstellungsport 28 führt. Dabei ist die Folie 54 hinsichtlich ihrer mechanischen Eigenschaften so gewählt, dass sie im Bereich dieser Öffnung bricht, sofern die Wand 30 weiter betätigt wird.

Eine Alternative Ausführungsform eines Perforationselement 58 ist in den Figuren 36 bis 38 dargestellt.

In dieser Variante umfasst das Perforationselement 58 einen Vorsprung oder eine Abdeckung, die entlang der Entleerrichtung E mit einem gewissen Abstand über dem Bereitstellungsport 28 liegt und dabei ins Innere des Aufnahmeraums 26 versetzt ist.

Auf diese Weise kann beim Entnehmen der Materialien aus der Materialvorratsbehälter 22 die Folie 54 eines Trennelements 52 an den Vorsprung oder die Abdeckung angelegt werden, sodass dieser Abschnitt der Folie 54 an einer weiteren Bewegung entlang der Entleerrichtung E hindert. Dies gilt jedoch nicht für andere Abschnitte der Folie 54, die nicht am Vorsprung anliegen. Auch das kann zu einem erwünschten Brechen oder Reißen der Folie 54 führen.

Die Figuren 40 bis 42 zeigen eine weitere Variante eines Trennelements 52. Im Unterschied zu den zuvor beschriebenen Trennelementen 52 sind die in den Figuren 40 bis 42 gezeigten Trennelemente nicht dazu ausgebildet, aufgebrochen zu werden. Vielmehr sind diese Trennelemente 52 als vergleichsweise stabile Scheiben ausgeführt, die sich bei Entnahme von Material aus dem Materialvorratsbehälter 22 entlang der Entleerrichtung E bewegen.

Allerdings ist beim Materialvorratsbehälter 22 aus den Figuren 40 bis 42 der Bereitstellungsport 28 nicht zentral am Aufnahmeraum 26 angeordnet, sondern geht bezüglich der Entleerrichtung E seitlich oder radial vom Aufnahmeraum 26 ab. Somit ist es bei diesen Materialvorratsbehälter 22 möglich, dass ein Trennelement 52 in axiale Anlage an ein Bereitstellungsport-seitiges Ende des Aufnahmeraums 26 kommt, dort aber den Bereitstellungsport 28 nicht verschließt, da dieser ja seitlich abgeht. Auf diese Weise lassen sich entlang der Entleerrichtung E hintereinander angeordnete Materialien zuverlässig mittels eines Trennelements 52 getrennt halten.

Um in der Variante aus den Figuren 40 bis 42 den Materialvorratsbehälter 22 trotzdem zentral mit einem Bauraum 18 materialleitend verbinden zu können, ist der Materialvorratsbehälter 22 in dieser Variante zudem mit einem Sammelgehäuse 60 ausgestattet, durch das Material, das den Aufnahmeraum 26 über einen seitlichen Bereitstellungsport verlässt, zu einem zentralen Anschluss geführt wird.

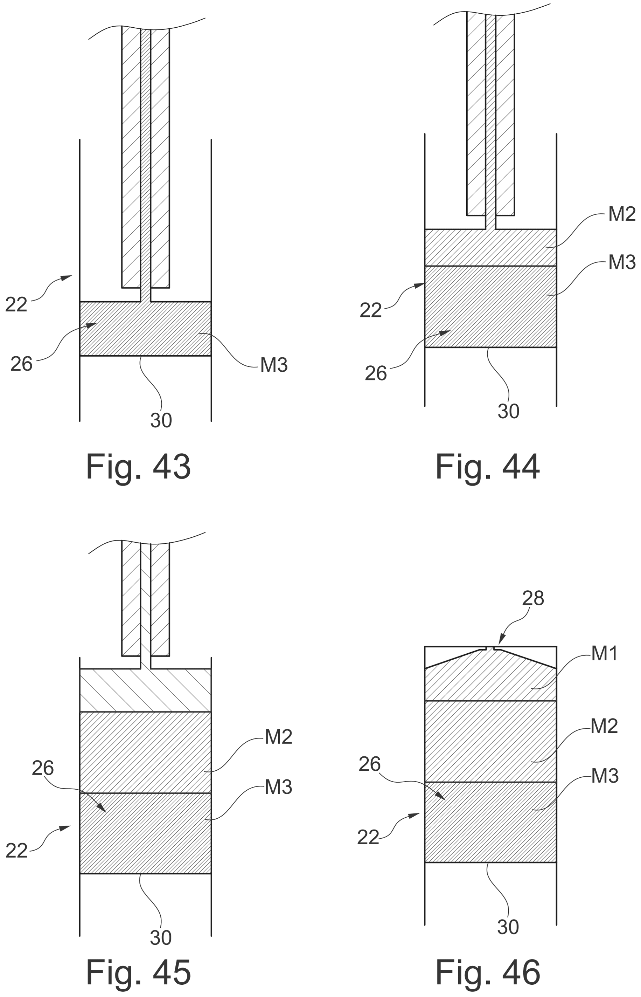

Um die Materialvorratsbehälter 22 mit den darin angeordneten Materialien in der zuvor anhand mehrerer Beispiele beschriebenen Weise nutzen zu können, ist es nötig, die Materialvorratsbehälter 22 mit den entsprechenden Materialien zu befüllen. Dies wird anhand der Figuren 43 bis 46 erläutert.

In diesem Beispiel geht es um das Befüllen eines Materialvorratsbehälters 22 mit Materialien, die entlang der Entleerrichtung in diskreten makroskopischen Schichten hintereinander angeordnet sind.

Dabei wird zunächst ein drittes Material eingebracht (siehe Figur 43).

Hierzu kann ein Schlauch, ein Rohr oder eine Nadel einer Spritze verwendet werden.

Optional wird vor dem Einbringen des dritten Materials und/oder während des Einbringens des dritten Materials M3 eine Viskosität des dritten Materials M3 reduziert oder geringgehalten. Auf diese Weise wird das Einbringen des dritten Materials M3 in den Aufnahmeraum 26 erleichtert. Beispielsweise lässt sich eine verringerte Viskosität dadurch erreichen, dass das dritte Material M3 gewärmt wird.

Im Beispiel der Figur 43 wird das dritte Material M3 mit einer beheizten Spritze in den Aufnahmeraum 26 eingebracht.

Danach kann optional gewartet werden, bis sich die Viskosität des dritten Materials M3 wieder erhöht hat, d. h. vereinfacht gesagt, bis das dritte Material M3 wieder fest oder fester geworden ist.

Anschließend wird ein zweites Material M2 in den Aufnahmeraum 26 eingebracht (siehe Figur 44).

Auch dabei kann wieder die Viskosität des zweiten Materials M2 verringert oder geringgehalten werden, während dieses in den Aufnahmeraum 26 eingebracht wird.

Im Beispiel der Figur 44 wird das zweite Material M2 wieder mit einer beheizten Spritze in den Aufnahmeraum 26 eingebracht.

Wieder wird danach gewartet, bis eine Viskosität des zweiten Materials M2 sich wieder erhöht hat.

Erst danach wird das erste Material M1 eingebracht. Dies erfolgt in derselben Weise, die bereits im Zusammenhang mit dem dritten Material M3 mit dem zweiten Material M2 erläutert wurde.

Ist auch das erste Material M1 vollständig in den Aufnahmeraum 26 eingebracht, wird der Aufnahmeraum mit einer Kappe 62 verschlossen, an der im Ausführungsbeispiel gemäß Figur 46 auch der Bereitstellungsport 28 vorgesehen ist.

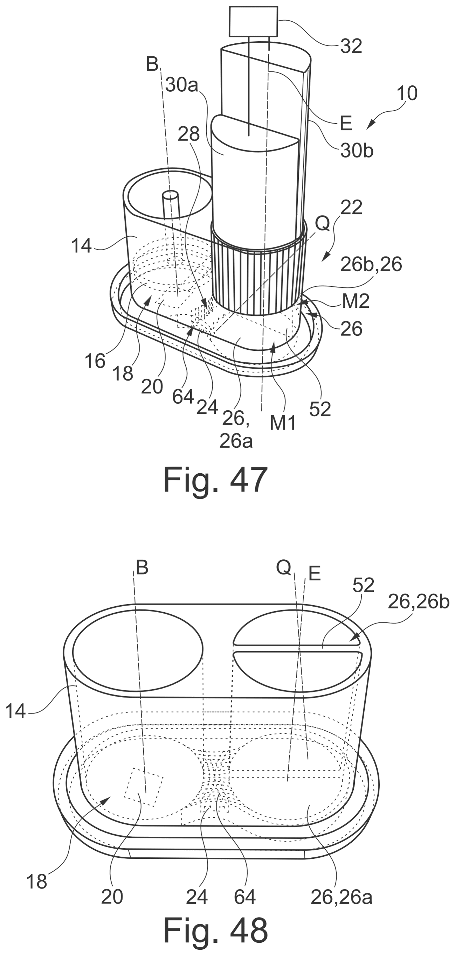

Figur 47 und 48 zeigen ein dreizehntes Beispiel einer Vorrichtung 10 zum additiven Herstellen einer Dentalrestauration 12. Dabei zeigt die Figur 47 die Vorrichtung insgesamt, wobei das Bauraumgehäuse 14, der Materialvorratsbehälter 22 und die Leitung 24 transparent dargestellt sind. In der Figur 48 ist die Vorrichtung aus Figur 47 in einer anderen Ansicht gezeigt, wobei im Unterschied zur Figur 47 die Bauplattform 16 sowie die bewegbaren Wände bewegbare Wand 30a, 30b weggelassen sind.

Der in der Figur 47 dargestellte Betriebszustand kann mit einem Beginn der additiven Herstellung der Dentalrestauration 12 zusammenfallen. Die herzustellende Dentalrestauration 12 ist daher nicht näher dargestellt.

Wie die bereits erläuterten Vorrichtungen 10, umfasst auch die Vorrichtung 10 des dreizehnten Beispiels ein Bauraumgehäuse 14, das die Form eines einseitig geschlossenen Zylinders hat, der sich entlang einer Baurichtung B erstreckt.

Im Inneren des Bauraumgehäuses 14 ist eine Bauplattform 16 geführt, sodass sich die Bauplattform 16 entlang der Baurichtung B bewegen, d.h. verschieben, lässt.

Das Bauraumgehäuse 14 und die Bauplattform 16 begrenzen somit einen Bauraum 18, in dem die Dentalrestauration 12 hergestellt werden kann. Der Bauraum 18 ist somit auch im Wesentlichen zylindrisch, im dargestellten Beispiel kreiszylindrisch, wobei eine zugehörige Zylinderachse mit der Baurichtung B zusammenfällt. Es versteht sich, dass in anderen Beispielen auch andere Querschnittsformen möglich sind.

Ferner ist das geschlossene Ende des Bauraumgehäuses 14 zumindest abschnittsweise transparent ausgeführt. Dabei ist eine lediglich schematisch dargestellt Belichtungseinheit 20 am geschlossenen Ende des Bauraumgehäuses 14, jedoch außerhalb des Bauraums 18, angeordnet.

Die Vorrichtung 10 umfasst zudem einen Materialvorratsbehälter 22, der materialleitend mit dem Bauraum 18 gekoppelt ist. In der dargestellten Ausführungsform sind der Materialvorratsbehälter 22 und der Bauraum 18 über eine Leitung 24 materialleitend gekoppelt.

Dabei weist der Materialvorratsbehälter 22 einen Aufnahmeraum 26 auf, der im Wesentlichen zylindrisch, zum Beispiel kreiszylindrisch, ist und sich entlang einer Zylinderachse erstreckt. Dabei sind der kreiszylindrische Materialvorratsbehälter 22 und somit auch der Aufnahmeraum 26 an einem Ende geschlossen.

Im dreizehnten Beispiel ist der Aufnahmeraum 26 ferner mittels eines Trennelements 52 in zwei Abschnitte 26a, 26b untergliedert. Die Abschnitte 26a, 26b sind dabei entlang einer Richtung Q hintereinander angeordnet, die quer zu einer Entleerrichtung E des Materialvorratsbehälters 22 verläuft. Dabei ist das Trennelement 52 als feststehendes Wandelement ausgeführt. Dieses ist zudem als integraler Bestandteil des Materialvorratsbehälters 22 ausgeführt. Das bedeutet, dass eine Umfangswand des Materialvorratsbehälters 22, die den Aufnahmeraum 26 seitlich begrenzt, also vorliegend den Zylindermantel darstellt, und das Trennelement 52 einstückig gefertigt oder im Betrieb der Vorrichtung 10 zumindest permanent verbunden sind.

In den Abschnitten 26a, 26b des Aufnahmeraums 26 können somit zwei verschiedene Materialien M1, M2 angeordnet werden. Diese sind dann ebenfalls entlang einer Richtung Q hintereinander angeordnet, die quer zu einer Entleerrichtung E des Materialvorratsbehälters 22 verläuft. Das Trennelement 52 trennt die Materialien M1, M2 zuverlässig voneinander. Die Kopplung des Aufnahmeraums 26 mit dem Bauraum 18 ist dabei derart gestaltet, dass Material M1, M2 aus beiden Abschnitten 26a, 26b des Aufnahmeraums 26 über einen Bereitstellungsport des Materialvorratsbehälters 22 in die Leitung 24 gelangen kann.

Auf einer dem Bereitstellungsport 28 entgegengesetzten Stirnseite des zylindrischen Aufnahmeraums 26 ist jeder der Abschnitte 26a, 26b des Aufnahmeraum 26 durch eine jeweils zugehörige bewegbare Wand 30a, 30b begrenzt.

Diese bewegbaren Wände 30a, 30b sind mit einem lediglich schematisch dargestellten Antrieb 32 gekoppelt, sodass sich durch Bewegen der Wand 30a in Richtung zum Bereitstellungsport 28 Material M1 aus dem Abschnitt 26a des Aufnahmeraums 26 herausdrücken lässt und sodass sich durch Bewegen der Wand 30b in Richtung zum Bereitstellungsport 28 Material M2 aus dem Abschnitt 26b des Aufnahmeraums 26 herausdrücken lässt.

Diejenige Richtung, entlang der sich die Wände 30a, 30b bewegen lassen, wird daher, wie bisher, auch als Entleerrichtung E bezeichnet. Die Entleerrichtung E fällt mit der Zylinderachse des zylindrischen Aufnahmeraums 26 im Wesentlichen zusammen. Aufgrund der Kopplung des Materialvorratsbehälters 22 und des Bauraums 18 über die Leitung 24 wird auf diese Weise Material im Bauraum 18 bereitgestellt.

Die in den Figuren 47 und 48 dargestellte Vorrichtung 10 zum additiven Herstellen einer Dentalrestauration 12 funktioniert nach dem Prinzip der Stereolithographie. Das bedeutet, dass die Dentalrestauration 12 schichtweise aufgebaut wird, indem durch Betätigung des Antriebs 32 und Verschiebung der Wände 30a, 30b Material für eine Bauteilschicht vom Materialvorratsbehälter 22 in den Bauraum 18 eingebracht wird. Gleichzeitig wird die Bauplattform 16 derart bewegt, dass ein Volumeninkrement, das aus der Verschiebung einer der Wände 30a, 30b resultiert, einem Volumeninkrement entspricht, das aus der Verschiebung der Bauplattform 16 entspricht. Dabei stellt die Vorrichtung 10 ein sogenanntes geschlossenes System dar, bei dem die zum additiven Herstellen der Dentalrestauration 12 verwendeten Materialien M1, M2 mittels Komponenten der Vorrichtung 10 stets von einer Umgebung, insbesondere von Umgebungsluft, abgeschirmt sind. Aufgrund der Geschlossenheit des Systems sind dabei auch die Bauplattform 16 und die Wände 30a, 30b über die im Bauraum 18 und/oder im Materialvorratsbehälter 22 vorhandenen Materialien M1, M2 hydraulisch gekoppelt. Aufgrund dieser Konfiguration kann die Bauplattform 16 lediglich beweglich gelagert sein, jedoch ohne eigenen Antrieb auskommen. Die Bauplattform 16 wird dann mittelbar durch den Antrieb 32 und die hydraulische Kopplung angetrieben.

Sodann wird das Material der Bauteilschicht ortsspezifisch mittels der Belichtungseinheit 20 ausgehärtet. Dieses Vorgehen wird so oft wiederholt, bis die Dentalrestauration 12 aus einer Vielzahl an Bauteilschichten vollständig hergestellt ist.

Für den Fall, dass die Vorrichtung 10 einen bereits erläuterten, optionalen Ablassport 34 aufweist, kann es zudem nötig sein, dass sich die Bauplattform 16 arretieren lässt, d.h. gezielt an einer Bewegung hindern lässt. Dadurch wird beim Ablassen von Material durch den Ablassport 34 eine Bewegung der Bauplattform 16 verhindert.

Im Beispiel der Figur 47 sind im Aufnahmeraum 26, wie bereits erläutert, insgesamt zwei Materialien angeordnet, d. h. ein erstes Material M1 und ein zweites Material M2.

Diese Materialien M1, M2 unterscheiden sich hinsichtlich wenigstens eines Materialkennwerts, der eine optische Materialeigenschaft, insbesondere eine Materialfarbe und/oder eine Transluzenz, eine mechanische Materialeigenschaft und/oder eine chemische Materialeigenschaft beschreibt.

In diesem Zusammenhang kann beispielsweise das Material M1 dazu ausgebildet sein, eine Zahnschneide nachzubilden, d.h. wenigstens ein Materialkennwert, der eine optische Materialeigenschaft, insbesondere eine Materialfarbe und/oder eine Transluzenz, eine mechanische Materialeigenschaft und/oder eine chemische Materialeigenschaft beschreibt, ist so gewählt, dass eine Zahnschneide nachgebildet werden kann. Das Material M2 kann dann dazu ausgebildet sein, einen Zahnrumpf, d.h. eine Zahnkrone ohne die Schneide, nachzubilden. Das bedeutet, dass wenigstens ein Materialkennwert, der eine optische Materialeigenschaft, insbesondere eine Materialfarbe und/oder eine Transluzenz, eine mechanische Materialeigenschaft und/oder eine chemische Materialeigenschaft beschreibt, so gewählt ist, dass ein Zahnrumpf nachgebildet werden kann.

Die Füllstände der Materialien M1, M2 in den Abschnitten 26a, 26b des Aufnahmeraums 26 können dabei so gewählt werden, dass von jedem der Materialien M1, M2 eine ausreichende Menge zu Herstellung einer Dentalrestauration 12 vorhanden ist. Dabei können übliche Verhältnisse der benötigten Volumina der Materialien M1, M2 berücksichtigt werden, z. B. kann vom Material, mittels dem die Zahnschneide nachgebildet wird, nur ca. 50% des Volumens des Materials vorgesehen sein, aus dem der Zahnrumpf nachgebildet wird.

Mittels der Vorrichtung 10 lässt sich somit die Dentalrestauration 12 schichtweise mittels dem zuvor beschriebenen Stereolithographie-Verfahren herstellen. Dabei kann derjenige Abschnitt der Dentalrestauration 12, der die Zahnschneide nachbildet, zuerst gefertigt werden, indem das Material M1 durch Betätigung der beweglichen Wand 30a mittels des Antriebs 32 zuerst verarbeitet wird. Daran anschließend kann derjenige Abschnitt der Dentalrestauration 12, der den Zahnrumpf nachbildet, gefertigt werden, indem das Material M2 durch Betätigung der beweglichen Wand 30b mittels des Antriebs 32 verarbeitet wird.

Dabei bestehen hinsichtlich des Antriebs der beweglichen Wände 30a, 30b zwei Alternativen. In einer ersten Alternative ist jede der beweglichen Wände 30a, 30b individuell antreibbar. In einer zweiten Alternative wird ein einziger Antrieb zum Antreiben beider Wände 30a, 30b verwendet. In diesem Fall kann ein Kolben, der die bewegliche Wand 30b bildet, an einem dem Aufnahmeraum 26 abgewandten Ende kürzer sein als ein Kolben, der die bewegliche Wand 30a bildet. Wenn in diesem Fall der Antrieb 32 einen Antriebsstempel oder eine Druckplatte umfasst, wird dieser Antrieb mittels des Antriebsstempels oder der Druckplatte also zunächst den Kolben bewegen, an dem die Wand 30a ausgebildet ist, und erst nach einiger Zeit, wenn derjenige Abschnitt der Dentalrestauration 12 gefertigt ist, der die Zahnschneide nachbildet, den Kolben in Bewegung setzen, an dem die Wand 30b ausgebildet ist. Ab diesem Zeitpunkt werden beide Materialien M1 und M2 in gemischter Form verarbeitet. Hierzu kann in der Leitung 24 eine Mischschikane 64 vorgesehen sein.

Die Mischschikane 64 kann dabei eines oder mehrere Strömungshindernisse für die Materialien M1 und M2 aufweisen, sodass sich durch die Umströmung des einen Strömungshindernisses oder der mehreren Strömungshindernisse lokal unterschiedliche Strömungsgeschwindigkeiten der Materialien M1 und M2 ergeben. Die führt zu einem Mischen der Materialien M1 und M2.

In einem Beispiel, in dem mehrere Strömungshindernisse vorgesehen sind, können diese in einem regelmäßigen oder unregelmäßigen Raster angeordnet sein.

Es lässt sich somit die Dentalrestauration 12 herstellen, wobei entlang der Baurichtung B verschiedene Abschnitte der Dentalrestauration 12 aus verschiedenen Materialien M1, M2 hergestellt sind.

### Bezugszeichenliste

- 10: Vorrichtung zum additiven Herstellen einer Dentalrestauration
- 12: Dentalrestauration
- 14: Bauraumgehäuse
- 16: Bauplattform
- 18: Bauraum
- 20: Belichtungseinheit
- 22: Materialvorratsbehälter
- 24: Leitung
- 26: Aufnahmeraum des Materialvorratsbehälters
- 28: Bereitstellungsport des Materialvorratsbehälters
- 30: Wand
- 32: Antrieb
- 34: Ablassport
- 36: Aufnahmebehälter
- 38: Leitung
- 40: Aufnahmeraum des Aufnahmebehälters
- 42: Bereitstellungsport des Aufnahmebehälters
- 44: Wand des Aufnahmebehälters
- 46: Antrieb
- 48: Wanne
- 50: Mischvorrichtung
- 52: Trennelement
- 54: Folie
- 56: Führungselement
- 58: Perforationselement
- 60: Sammelgehäuse
- 62: Kappe
- 64: Mischschikane

- E: Entleerrichtung
- B: Baurichtung
- Q: Richtung, die quer zur Entleerrichtung verläuft
- M1: erstes Material
- M2: zweites Material
- M3: drittes Material
- M4: viertes Material
- M5: fünftes Material
- M6: sechstes Material

## Patentansprüche

1. Materialvorratsbehälter (22) für Material (M1, M2, M3, M4, M5, M6) zur additiven Herstellung einer Dentalrestauration (12), mit einem Aufnahmeraum (26) und einem Bereitstellungsport (28), der materialleitend mit dem Aufnahmeraum (26) gekoppelt ist, sodass über den Bereitstellungsport (28) Material (M1, M2, M3, M4, M5, M6) aus dem Aufnahmeraum (26) zur additiven Herstellung der Dentalrestauration (12) bereitgestellt werden kann,
wobei im Aufnahmeraum (26) wenigstens ein erstes Material (M1) und ein zweites Material (M2) angeordnet sind, welche sich hinsichtlich wenigstens eines Materialkennwerts unterscheiden, und
wobei das erste Material (M1) und das zweite Material (M2) entlang einer Entleerrichtung (E) des Aufnahmeraums (26) hintereinander angeordnet sind und/oder wobei das erste Material (M1) und das zweite Material (M2) entlang einer Richtung (Q), die quer zu einer Entleerrichtung (E) verläuft, hintereinander angeordnet sind.

2. Materialvorratsbehälter (22) nach Anspruch 1, wobei der wenigstens eine Materialkennwert eine optische Materialeigenschaft, insbesondere eine Materialfarbe und/oder eine Transluzenz, eine mechanische Materialeigenschaft oder eine chemische Materialeigenschaft beschreibt.

3. Materialvorratsbehälter (22) nach Anspruch 1 oder 2, ferner umfassend einen Ablassport (34) zum Abführen von Material (M1, M2, M3, M4, M5, M6), das nicht zur additiven Herstellung einer Dentalrestauration (12) verwendet werden soll.

4. Materialvorratsbehälter (22) nach einem der vorhergehenden Ansprüche,
wobei das erste Material (M1) und das zweite Material (M2) jeweils in Form einer diskreten makroskopischen Schicht angeordnet sind, und/oder
wobei im Aufnahmeraum (26) eine Vielzahl an Materialien (M1, M2, M3, M4, M5, M6) angeordnet sind, welche sich hinsichtlich wenigstens eines Materialkennwerts unterscheiden, wobei die Vielzahl an Materialien (M1, M2, M3, M4, M5, M6) entlang der Entleerrichtung (E) des Aufnahmeraums (26) oder quer zur Entleerrichtung des Aufnahmeraums derart hintereinander angeordnet sind, dass sich makroskopisch ein kontinuierlicher Verlauf des wenigstens einen Materialkennwerts ergibt.

5. Materialvorratsbehälter (22) nach einem der vorhergehenden Ansprüche, ferner umfassend ein Trennelement (52), das zwischen dem ersten Material (M1) und dem zweiten Material (M2) angeordnet ist, um das erste Material (M1) vom zweiten Material (M2) zu separieren.

6. Materialvorratsbehälter (22) nach Anspruch 5, wobei das Trennelement (52) und/oder eine den Aufnahmeraum (26) begrenzende Seitenwand ein Führungselement (56) zum Führen des Trennelements (52) entlang der Entleerrichtung (E) aufweist.

7. Materialvorratsbehälter (22) nach Anspruch 5 oder 6, wobei das Trennelement (52) eine Folie (54) oder eine Membran oder ein feststehendes Wandelement umfasst.

8. Materialvorratsbehälter (22) nach einem der Ansprüche 5 bis 7, ferner umfassend ein Perforationselement (58) zum Aufbrechen des Trennelements (52).

9. Verfahren zum Befüllen eines Materialvorratsbehälters (22) für Material (M1, M2, M3, M4, M5, M6) zur additiven Herstellung einer Dentalrestauration (12), umfassend:
Einbringen eines ersten Materials (M1) und eines zweiten Materials (M2) in einen Aufnahmeraum (26) des Materialvorratsbehälters (22),
wobei sich das erste Material (M1) und das zweite Material (M2) hinsichtlich wenigstens eines Materialkennwerts unterscheiden, und
wobei das erste Material (M1) und das zweite Material (M2) entlang einer Entleerrichtung (E) des Materialvorratsbehälters (22) hintereinander angeordnet werden und/oder wobei das erste Material (M1) und das zweite Material (M2) entlang einer Richtung (Q), die quer zu einer Entleerrichtung (E) verläuft, hintereinander angeordnet werden.

10. Verfahren nach Anspruch 9, ferner umfassend: Reduzieren einer Viskosität des ersten Materials (M1) und/oder des zweiten Materials (M2) vor dem Einbringen in den Aufnahmeraum (26).

11. Vorrichtung (10) zum additiven Herstellen einer Dentalrestauration (12), umfassend einen Bauraum (18) zum additiven Aufbauen der Dentalrestauration (12) und einen Materialvorratsbehälter (22) nach einem der Ansprüche 1 bis 8, der materialleitend mit dem Bauraum (18) gekoppelt ist, insbesondere wobei die Vorrichtung einen Ablassport (34) zum Abführen von Material (M1, M2, M3, M4, M5, M6), das nicht zur additiven Herstellung einer Dentalrestauration (12) verwendet werden soll, umfasst.

12. Verfahren zum additiven Herstellen einer Dentalrestauration (12), umfassend:
- Erstellen einer ersten Bauteilschicht der Dentalrestauration (12) aus einem ersten Material (M1), und anschließendes Erstellen einer zweiten Bauteilschicht der Dentalrestauration (12) aus einem zweiten Material (M2), und/oder
- Erstellen einer Bauteilschicht aus dem ersten Material (M1) und aus dem zweiten Material (M2),
wobei sich das erste Material (M1) und das zweite Material (M2) hinsichtlich wenigstens eines Materialkennwerts unterscheiden und wobei das erste Material (M1) und das zweite Material (M2) mittels desselben Materialvorratsbehälters (22) bereitgestellt werden.

13. Verfahren nach Anspruch 12, wobei der wenigstens eine Materialkennwert eine optische Materialeigenschaft, insbesondere eine Materialfarbe und/oder eine Transluzenz, eine mechanische Materialeigenschaft oder eine chemische Materialeigenschaft beschreibt.

14. Verfahren nach Anspruch 12 oder 13, ferner umfassend: Ablassen von erstem Material (M1) und/oder zweitem Material (M2), das nicht zur Herstellung der Dentalrestauration (12) verwendet wird.
